# EUROPEAN PATENT APPLICATION

(11) **EP 4 575 838 A1**
(43) Date of publication of application: **25.06.2025**
(21) Application number: 23218572.8
(22) Date of filing: 20.12.2023
(51) Int. Cl.: G06F 16/906, G06N 3/00

(54) **ARTIFICIAL INTELLIGENCE (AI) MODEL VALIDITY**

(71) Applicant: INTEL Corporation, Santa Clara, CA 95054 (US)
(72) Inventor: MUECK, Markus Dominik, 82008 Unterhaching (DE); ROTH, Kilian, 80469 Muenchen (DE); LUETZENKIRCHEN, Thomas, 82024 Taufkirchen (DE); SABELLA, Dario, 10090 Gassino Torinese (IT)
(74) Representative: Viering, Jentschura & Partner mbB Patent- und Rechtsanwälte

(57) **Abstract**

Systems, apparatuses, methods, and computer-readable media are provided for validation or correction of an artificial intelligence (AI) model. Specifically, embodiments relate to one or more logical entities that may be associated with a processing entity of the AI system. The logical entities may be configured to analyze, validate, and or correct one or more aspects of the AI model. Other embodiments may be described and/or claimed.

## Description

### BACKGROUND

The European Commission is, at the time of drafting the present application, in the process of finalizing its "Artificial Intelligence (AI) Regulation" [1]. The AI Regulation introduces a list of so-called "High Risk" systems and related requirements to be met. The European Council is proposing to extend the list of "High Risk" systems to include "Digital Infrastructure" [2]. This proposal implies the inclusion of Cellular Infrastructure into the "High Risk" systems list by the AI Regulation and thus related products must meet the corresponding requirements.

On 22nd May 2023, the European Commission has provided a Standardization Request (SR) to European Standardisation Organisations (ESOs) CEN/CENELEC [2]. Since the AI Act is not yet finalized and published, the Draft Standardization Request will not require ESOs to develop Harmonised European Norms (HENs), but other types of deliverables, including non-harmonised European Norms (ENs).

### BRIEF DESCRIPTION OF THE FIGURES

Figures 1A and 1B (collectively, Figure 1) provide an example feedback loop related to artificial intelligence (Al) processing entities, in accordance with various embodiments.
Figure 2 depicts an example feed-back loop that is related to a processing verification entity (PVE) and a feed-back analysis entity (FBAE), in accordance with various embodiments.
Figure 3 depicts an example of selection by an FBAE of a processing entity, in accordance with various embodiments.
Figure 4 depicts an example of memory-based management of corrective actions, in accordance with various embodiments.
Figure 5 depicts an example of verification of which AI systems or application a specific processing entity may be authorized for, in accordance with various embodiments.
Figures 6A and 6B (collectively, Figure 6) depict an example of cross-stakeholder verification and authorization, in accordance with various embodiments.
Figure 7 depicts an example of an input verification entity (IVE) and an output meta-data entity (OMDE), in accordance with various embodiments.
Figure 8 depicts an example procedure for practicing the various embodiments discussed herein.
Figure 9 depicts another example procedure for practicing the various embodiments discussed herein.
Figure 10 depicts another example procedure for practicing the various embodiments discussed herein.
Figure 11 provides a high-level view of an Open RAN (O-RAN) architecture, in accordance with various embodiments.
Figure 12 shows an O-RAN logical architecture corresponding to the O-RAN architecture of Figure 11, in accordance with various embodiments.
Figure 13 illustrates a simplified block diagram of artificial (Al)-assisted communication between a UE and a RAN , in accordance with various embodiments

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A or B" and "A/B" mean (A), (B), or (A and B).

Embodiments may relate to the AI Act introduction of a single "AI System", and further relate to the observation that different Al-related actions (such as provision of training data, learning, inferencing, usage of inferencing result, etc.) can be under control of distinct stakeholders (e.g., different entities or electronic devices perform different ones of the various Al-related actions). Embodiments herein may relate to or include means to ensure that any previous action has been executed in accordance to the essential requirements of the AI Act [1]. This may include or relate to a feed-back loop between the entities that are under control of distinct stakeholders. This feed-back loop help to identify issues (such as violations of requirements introduced by [1]) and triggers actions (such as change of training data, etc.) from preceding processing entities under control of distinct stakeholders.

More specifically, in the context of generative Al, and for the sake of discussion herein, it may be assumed that different Al-related actions (such as provision of training data, learning, inferencing, usage of inferencing result, etc.) can be under control of distinct stakeholders. As such, embodiments may relate to how to ensure that prior processing entities are meeting the requirements of the AI Act [1]. Embodiments may further relate to how to implement a feed-back loop to inform prior processing element on observed violations of the essential requirements of the AI Act [1] (that may not have been previously observable).

It is a new initiative by the European Commission to implement a broad regulation covering AI Systems and especially "High Risk" AI Systems (see below for a definition).

Legacy AI Systems may be considered as a "System" under control of a single stakeholder. For example, any issues and requirements-related actions (such as reshaping of training data, avoidance of biases, etc.) are handled by a single stakeholder - often relying on a "proprietary" approach. Embodiments herein relate to the case that different Al-related actions (such as provision of training data, learning, inferencing, usage of inferencing result, etc.) can be under control of distinct stakeholders, and thus it may be desirable to implement a control chain to verify that any prior processing has been executed in accordance with the AI Act.

Embodiments herein relate to ways to address the requirements outlined in the Draft AI Act [1] under the assumption that different processing entities (e.g., entities that perform processing actions such as provision of training data, learning, inferencing, usage of inferencing result, etc.) can be under control of different/distinct stakeholders and thus we need to implement a control chain to very that any prior processing has been executed in accordance to the AI Act [1]. Embodiments may therefore include or relate to one or more of the following:
- A certificate-based approach to validate the compliance of intermediate processing actions with the essential requirements of the AI Act [1].
- Entities to validate the certificates and thus compliance with prior processing actions.
- A novel & innovative feed-back loop to report any issues & violations of the essential requirements of the AI Act [1].

It may be incorrectly argued that all verifications should have been properly executed in prior actions, and so no feed-back loop is necessary. However, this argument may not always hold in the context of AI. Indeed, problems with the original training data may only be detected when the model is used in the inferencing action and, for example, unexpected biases are observed. Then, it is important to have a feed-back loop to report such observations to prior elements of the processing chain and to enforce a resolution of the issue.

Example solutions herein may ensure compliance with the AI Act [1], and thus enable continued market access even if different processing entities (e.g., entities that perform processing actions such as provision of training data, learning, inferencing, usage of inferencing result, etc.) are under control of distinct stakeholders.

Generally, the essential requirements of the AI Act [1] are targeting so called "High Risk" AI Systems as defined below. Embodiments herein therefore are described primarily in the context of such "High Risk" AI Systems. Other "non-High Risk" AI Systems may only be subject to very lightweight requirements. "High-Risk AI systems are defined in Annex III of [1] and summarized below:

### ANNEX III [1]

### HIGH-RISK AI SYSTEMS REFERRED TO IN ARTICLE 6(2)

High-risk AI systems pursuant to Article 6(2) are the AI systems listed in any of the following areas:
1. Biometric identification and categorisation of natural persons:
   (a) AI systems intended to be used for the `real-time' and `post' remote biometric identification of natural persons;
2. Management and operation of critical infrastructure:
   (a) AI systems intended to be used as safety components in the management and operation of road traffic and the supply of water, gas, heating and electricity.
3. Education and vocational training:
   (a) AI systems intended to be used for the purpose of determining access or assigning natural persons to educational and vocational training institutions;
   (b) AI systems intended to be used for the purpose of assessing students in educational and vocational training institutions and for assessing participants in tests commonly required for admission to educational institutions.
4. Employment, workers management and access to self-employment:
   (a) AI systems intended to be used for recruitment or selection of natural persons, notably for advertising vacancies, screening or filtering applications, evaluating candidates in the course of interviews or tests;
   (b) AI intended to be used for making decisions on promotion and termination of work-related contractual relationships, for task allocation and for monitoring and evaluating performance and behavior of persons in such relationships.
5. Access to and enjoyment of essential private services and public services and benefits:
   (a) AI systems intended to be used by public authorities or on behalf of public authorities to evaluate the eligibility of natural persons for public assistance benefits and services, as well as to grant, reduce, revoke, or reclaim such benefits and services;
   (b) AI systems intended to be used to evaluate the creditworthiness of natural persons or establish their credit score, with the exception of AI systems put into service by small scale providers for their own use;
   (c) AI systems intended to be used to dispatch, or to establish priority in the dispatching of emergency first response services, including by firefighters and medical aid.
6. Law enforcement:
   (a) AI systems intended to be used by law enforcement authorities for making individual risk assessments of natural persons in order to assess the risk of a natural person for offending or reoffending or the risk for potential victims of criminal offences;
   (b) AI systems intended to be used by law enforcement authorities as polygraphs and similar tools or to detect the emotional state of a natural person;
   (c) AI systems intended to be used by law enforcement authorities to detect deep fakes as referred to in article 52(3);
   (d) AI systems intended to be used by law enforcement authorities for evaluation of the reliability of evidence in the course of investigation or prosecution of criminal offences;
   (e) AI systems intended to be used by law enforcement authorities for predicting the occurrence or reoccurrence of an actual or potential criminal offence based on profiling of natural persons as referred to in Article 3(4) of Directive (EU) 2016/680 or assessing personality traits and characteristics or past criminal behaviour of natural persons or groups;
   (f) AI systems intended to be used by law enforcement authorities for profiling of natural persons as referred to in Article 3(4) of Directive (EU) 2016/680 in the course of detection, investigation or prosecution of criminal offences;
   (g) AI systems intended to be used for crime analytics regarding natural persons, allowing law enforcement authorities to search complex related and unrelated large data sets available in different data sources or in different data formats in order to identify unknown patterns or discover hidden relationships in the data.
7. Migration, asylum and border control management:
   (a) AI systems intended to be used by competent public authorities as polygraphs and similar tools or to detect the emotional state of a natural person;
   (b) AI systems intended to be used by competent public authorities to assess a risk, including a security risk, a risk of irregular immigration, or a health risk, posed by a natural person who intends to enter or has entered into the territory of a Member State;
   (c) AI systems intended to be used by competent public authorities for the verification of the authenticity of travel documents and supporting documentation of natural persons and detect non-authentic documents by checking their security features;
   (d) AI systems intended to assist competent public authorities for the examination of applications for asylum, visa and residence permits and associated complaints with regard to the eligibility of the natural persons applying for a status.
8. Administration of justice and democratic processes:
   (a) AI systems intended to assist a judicial authority in researching and interpreting facts and the law and in applying the law to a concrete set of facts.

Relevant technical requirements are mainly summarized in Article 9 to Article 18 in the AI Act. To give an example of specific relevance to some embodiments herein, Article 10 on "Data and data governance" [1] is provided below as follows:

### Article 10 [1]

### Data and data governance

1. High-risk AI systems which make use of techniques involving the training of models with data shall be developed on the basis of training, validation and testing data sets that meet the quality criteria referred to in paragraphs 2 to 5.
2. Training, validation and testing data sets shall be subject to appropriate data governance and management practices. Those practices shall concern in particular,
   (a) the relevant design choices;
   (b) data collection;
   (c) relevant data preparation processing operations, such as annotation, labelling, cleaning, enrichment and aggregation;
   (d) the formulation of relevant assumptions, notably with respect to the information that the data are supposed to measure and represent;
   (e) a prior assessment of the availability, quantity and suitability of the data sets that are needed;
   (f) examination in view of possible biases;
   (g) the identification of any possible data gaps or shortcomings, and how those gaps and shortcomings can be addressed.
3. Training, validation and testing data sets shall be relevant, representative, free of errors and complete. They shall have the appropriate statistical properties, including, where applicable, as regards the persons or groups of persons on which the high-risk AI system is intended to be used. These characteristics of the data sets may be met at the level of individual data sets or a combination thereof.
4. Training, validation and testing data sets shall take into account, to the extent required by the intended purpose, the characteristics or elements that are particular to the specific geographical, behavioural or functional setting within which the highrisk AI system is intended to be used.
5. To the extent that it is strictly necessary for the purposes of ensuring bias monitoring, detection and correction in relation to the high-risk AI systems, the providers of such systems may process special categories of personal data referred to in Article 9(1) of Regulation (EU) 2016/679, Article 10 of Directive (EU) 2016/680 and Article 10(1) of Regulation (EU) 2018/1725, subject to appropriate safeguards for the fundamental rights and freedoms of natural persons, including technical limitations on the re-use and use of state-of-the-art security and privacy-preserving measures, such as pseudonymisation, or encryption where anonymisation may significantly affect the purpose pursued.
6. Appropriate data governance and management practices shall apply for the development of high-risk AI systems other than those which make use of techniques involving the training of models in order to ensure that those high-risk AI systems comply with paragraph 2.

We note that some example processing actions of the AI System chain may include the following:
- Creation of training data;
- Training of AI Model;
- Inferencing based on AI Model;
- Usage of inferencing result.

Article 10 may include strong requirements on training data, in particular "Training, validation and testing data sets shall be relevant, representative, free of errors and complete"; also, one may note strong requirements on management of biases: "ensuring bias monitoring, detection, and correction in relation to the high-risk AI systems." While the provider of the original training data set may take great effort to ensure that all those requirements are being met, possible issues may only be detected in the later part of the processing chain which may be under control of other stakeholders (such as the inferencing part). This separation of stakeholders may be one motivation for the use of a feed-back loop to report and correct those issues in the prior processing entities or elements which are under control of distinct stakeholders.

As explained above, embodiments herein may relate to the case that multiple (or all) of the upper actions are under control of distinct stakeholders. As it will be explained at a later stage in the present document, in some embodiments the processing entity may rely on properly implemented prior actions, and it may be required that the prior actions are compliant with all applicable requirements of the AI Act [1]. This compliance may be guaranteed through certificates which are being issued by prior entities; only if the certificates of the prior processing entities are being provided and are valid, then a stakeholder will proceed with the usage of the provided input data.

Still, even if a stakeholder has performed various actions to ensure compliance with the requirements of the AI Act [1], there may be cases where issues are being identified only at a later stage in the processing chain. For example, when creating a set of training data, it may be difficult to ensure that it is free of biases for all cases. Rather, an initial training set may unexpectedly introduce some level of biases that are only detected at the output of the inferencing action - it is thus necessary to take such observations back to prior processing entities and to trigger corrective actions, for example a modification of the original training data set, a retraining of the system, a modification of the training parameterization or similar. It is possible that several iterations of such corrective actions are required to finally guarantee that the AI Systems complies with all requirements of the AI Act [1].

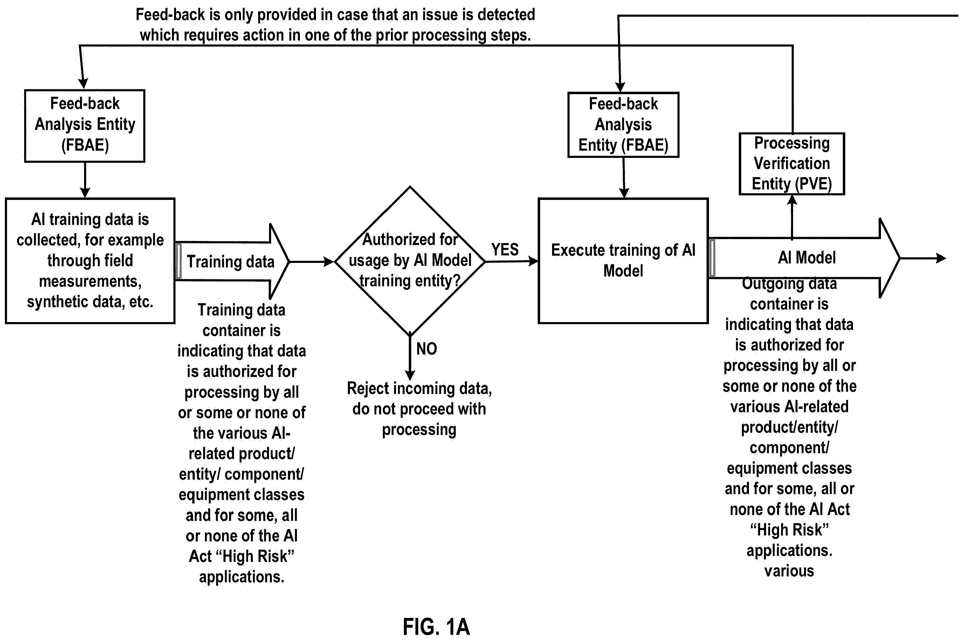

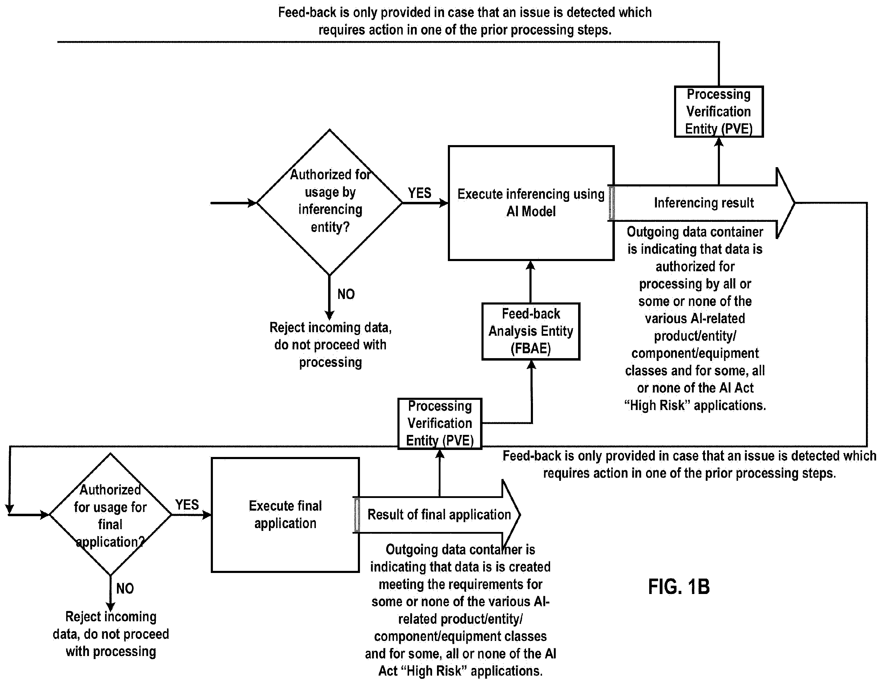

Figure 1 depicts an example of how i) one processing entity may validate input data obtained from a prior processing entity through validation of the related certificate and ii) how a feed-back loop may be implemented between the various processing entities, and how the feed-back loop may be used to report any issues that may lead to any violation of requirements of the AI Act, especially related to the technical requirements outlined in Article 9 to Article 18 of the AI Act [1]. Also, one or more FBAEs may be present, and may be configured to process received feed-back from future processing entities, and then trigger additional corrective actions (e.g., those described above), as required.

It will be understood that embodiments herein may be described as one or both of an FBAE and a PVE being part of a processing entity. This description is for the sake of concise discussion only, and are not intended to limit the AI architecture to a specific architecture. For example, in some embodiments the processing entity and one or both of the FBAE and the PVE may be implemented in a single piece of logic (e.g., a single piece of software, hardware, firmware, etc.). In other embodiments, the processing entity and one or both of the FBAE and the PVE may be implemented in different pieces of logic (e.g., different pieces of hardware, software, firmware, etc.). Typically, as used herein, a processing entity may perform one or more processing actions (e.g., one or more of the processing actions described above or described elsewhere herein).

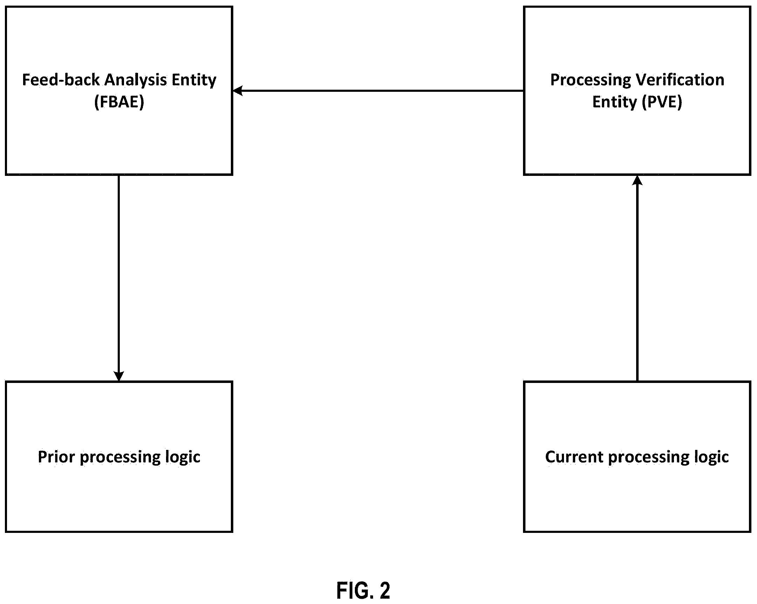

Each feed-back loop may therefore include one or both of a FBAE and a PVE, as depicted in Figure 2. Specifically, the PVE may be located at the processing entity that is the originator of the feed-back message, and the FBAE may be located at the processing entity that is the reception point of the feed-back message. However, it will be understood that in some embodiments a processing entity may have both a FBAE and a PVE (e.g., as shown in Figure 1).

The following container may be used for conveying the relevant feed-back information. The corresponding content may be created by PVE upon observation and analysis of the results of the current processing action (e.g., by analysis of the inferencing result to identify potential undesired biases, identification of false decisions, etc.):

### Information related to an observed issue:

i) Criticality of the event:
   (1) High: A violation of an essential requirement of the AI Act is observed (and the operation typically may be stopped)
   (2) Low: An unexpected result is observed, but it does not directly violate any essential articles of the AI Act.
ii) Description of the observed event, e.g.
   (1) Unexpected bias is observed (relevant example data are provided in the container below)
   (2) False inference result is observed (relevant example data are provided in the container below)
   (3) Etc.
iii) Requested action:
   (1) Immediate remediation of the issue (otherwise the system operation may be interrupted)
   (2) Request to further monitor the issue and to take action when appropriate.

Example data to substantiate the issues reported above may include, e.g., inferencing results which clearly demonstrate the issue such as an observed unexpected biases, false inferencing results, etc. Additional information which may help in the identification of the underlying issue, for example, is the prior data used for a specific High Risk application, etc.

The Feed-back Analysis Entity (FBAE) may be implemented in various ways. Two possible approaches may include a Memoryless FBAE and a Memory-Based FBAE.

A Memoryless FBAE may be a relatively straightforward way for implementing the FBAE. The FBAE may receive requests issued by the PVE and implement corrective actions. Those corrective actions may not depend on prior reports or prior decisions taken by the FBAE. They may target a "one-shot" correction of the identified issue. Options for suitable corrective measures may include one or more of the following:
(a) Usage of a redundant data set or redundant implementation of a processing step (such as learning, inferencing, etc.). It is indeed required by the AI Act to have such redundant components implemented ("High-risk AI systems shall be resilient as regards errors, faults or inconsistencies that may occur within the system or the environment in which the system operates... The robustness of high-risk AI systems may be achieved through technical redundancy solutions, which may include backup or fail-safe plans.") to increase the overall resilience of the AI System. For example, a redundant set of training data may be used, a different structure of a Deep-Learning neural network may be chosen, etc.;
(b) The processing configuration may be changed, for example during the learning stage a different trade-off between an observed bias and the overall accuracy may be applied; and/or
c) Any further alternative processing options.

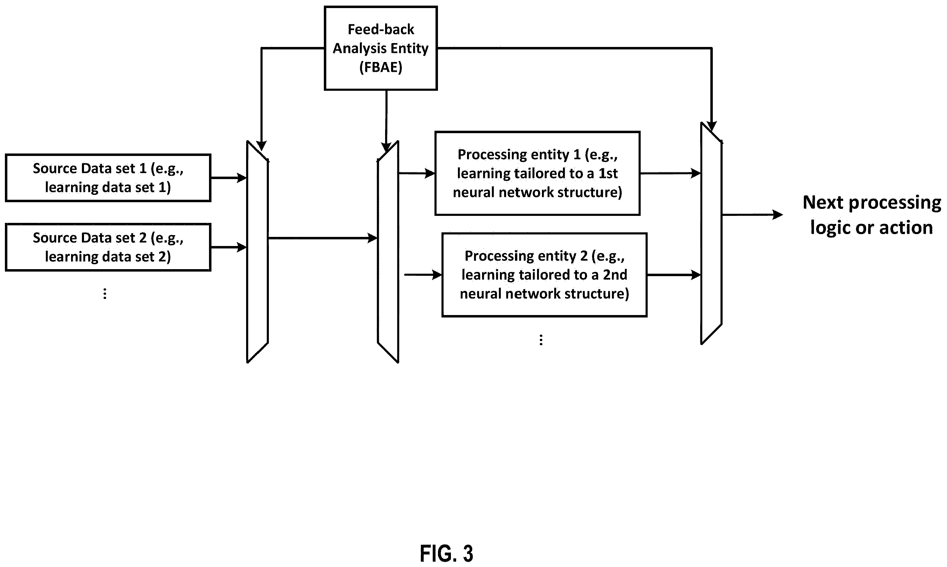

Figure 3 depicts an example of a memoryless FBAE and possible inputs/outputs/actions/etc.

Instead of using a different "neural network structure", the FBAE may decide to apply another deep learning method, for example Reinforcement Learning, tree-structure based decision-making (which is typically used when a high level of explicability of the machine learning (ML) results is required), etc.

In case of a major issue with the original training data set, the above mentioned actions may not be sufficient, and therefore the FBAE may enforce the assembly of an entirely new training data set.

In some cases, it might be possible to identify the data that does cause the issue and potentially verify its validity. If the data is invalid or erroneous it should be removed before restraining the system. If the data that is causing the problem is valid either more training data covering this special case could be included or the structure of the ML model may be analyzed to determine if a changed approach is more suitable to address this problem.

It is also possible that the problem is related to data missing from either the training or validation data set, or both. In this case this may be addressed by adding data for the cases that do cause the overall system issue.

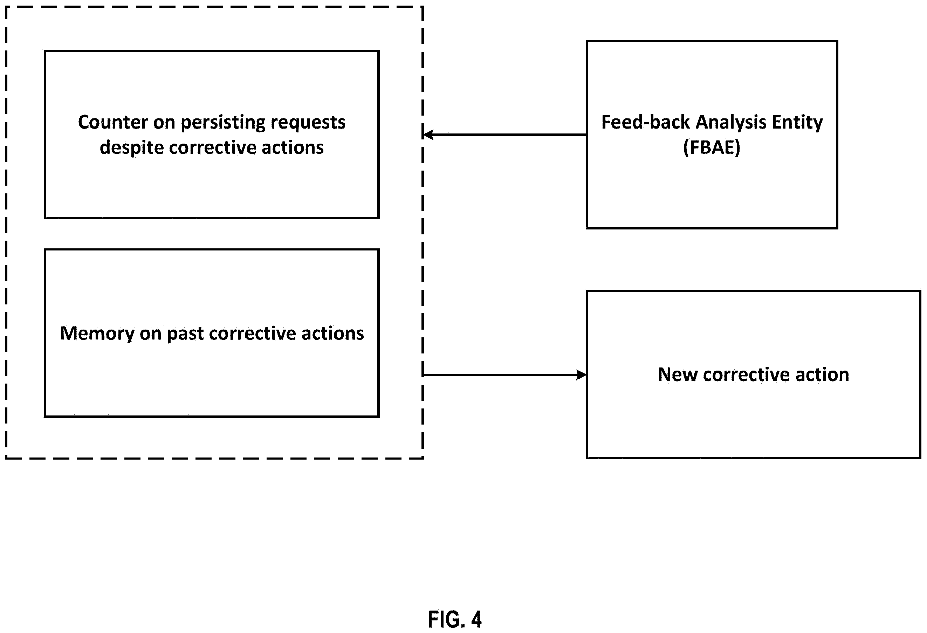

While the memoryless approach to FBAE targets a "one-shot" correction of issues related to the AI System (e.g., occurrence of undesired biases, incorrect decisions, etc.), the memory-based FBAE approach may take past decisions in account. This approach may be particularly useful in the case that a problem persists despite a prior ("one shot") corrective action. In the "memory based" approach, it is assumed that a problem might continue to persist and further requests for corrective action may follow. The "memory based" FBAE may thus first try to apply "simple" corrective actions and, in case the problem persists, the level of action may be gradually increased. Indeed, the FBAE may includes a counter plus a memory on the prior actions taken and gradually implements further corrective actions as illustrated in example Figure 4.

A example sequence of corrective actions is shown below - all of those subsequent actions may be implemented, only a subset of them and in any order:
1) Typically, as a first corrective action (but not necessarily, it could also be applied only in a later stage when the counter reaches a higher value), the "one-shot" approach is applied as detailed above.
2) Re-configuration of some or all of the processing actions, for example using a different neural network structure, using a different pruning approach (omitting some of the nodes of the neural network), using a different quantization approach (e.g., using a higher precision for the configuration of neural network nodes), using a different ML techniques (e.g., deep neural networks, tree based approach, reinforcement learning, regression, classification, clustering, dimensionality reduction, ensemble methods, neural networks and deep learning, transfer learning, natural language processing, word embeddings, etc.), etc.
3) Enforce new learning of the AI model applying a different configuration, for example applying a different trade-off to accuracy versus bias or accuracy versus robustness. Indeed, when enforcing a low bias, it may be achieved at the cost of a reduced accuracy of the AI system.
4) Choose a redundant training data set (for example to avoid biases since they may be caused by the structure of the applied data set).
5) Enforce the assembly of new training data and the creation of a new training data set.
6) Inform a "human supervisor" as required by the AI Act and inform "human supervisor" of unsuccessful application of corrective measures. The "human supervisor" may take steps, for example the termination of the operation of the AI system.
7) Tag output data by indicating that a certain problem has been detected (e.g., observation that undesired biases may occur, observation of false decision (at a certain probability), etc.).
8) Switch from AI/ML based processing to classical implementation (e.g., usage of a predetermined deterministic algorithm to solve the stated problem).
9) Pause the operation of the AI system (e.g., until the circumstances change, and the observed issues may no longer be relevant).
10) Terminate operation of the AI system (in case that the problem persists and it of such a level of severity that it cannot be tolerated).

In some embodiments, a prior processing element may provide its output data into a container that provides at least the following information:

### Certificate

1) ID of the Certificate and/or ID of the creator of the certificate
2) Statement (typically linked to a digital signature) indicating that prior processing element(s) has/have been conducted in full compliance with the essential requirements of the AI Act [1].
3) Validity of the Certificate
   a. List of equipment (typically a series of a product identified by a product identifier (ID))
   b. List of High Risk systems for which the data is authorized to be used (note: it may be a subset of the High Risk AI Systems/applications listed above)
   c. Time validity period (date of issue, validity time)
   d. Geographic location validity (list of European member states, other)
   e. Issuing authority Name
   f. Signature of the certificate authority
   g. Name of the organization as well as the model that the certificate is issued to

Note: In case that the incoming data is authorized to be used for multiple High Risk AI Systems / Applications (as described or defined above, if any), then it may be desirable to consider one or more of the following cases for the processing entity:
i) Is the processing entity authorized / certified for one of the High Risk AI Systems / Applications of the incoming data? If yes, then the incoming data can be processed. If not, the incoming data cannot be processed and the processing request may be rejected.
ii) The list of authorized High Risk AI Systems / Applications for further processing of the generated output data corresponds to those High Risk AI Systems / Applications which are
   a) indicated as authorized High Risk AI Systems / Applications for the input data and
   b) indicated as authorized High Risk AI Systems / Applications for the processing product/entity/equipment/component.

Example: Assume that the incoming data is authorized for High Risk AI Systems / Applications of a set S1 (example: S1 = {"1, 2, 3, 4"}) and the processing product/entity/component is authorized for High Risk AI Systems / Applications of a set S2 (example: S2 = {"2, 3, 5, 6, 7"}) then the output data is only authorized for processing by products/equipment/entities/components of High Risk AI Systems / Applications of S1 ∩ S2 (following the previous examples: S1 ∩ S2 = {"2,3"}) because those are the only overlapping authorized categories.

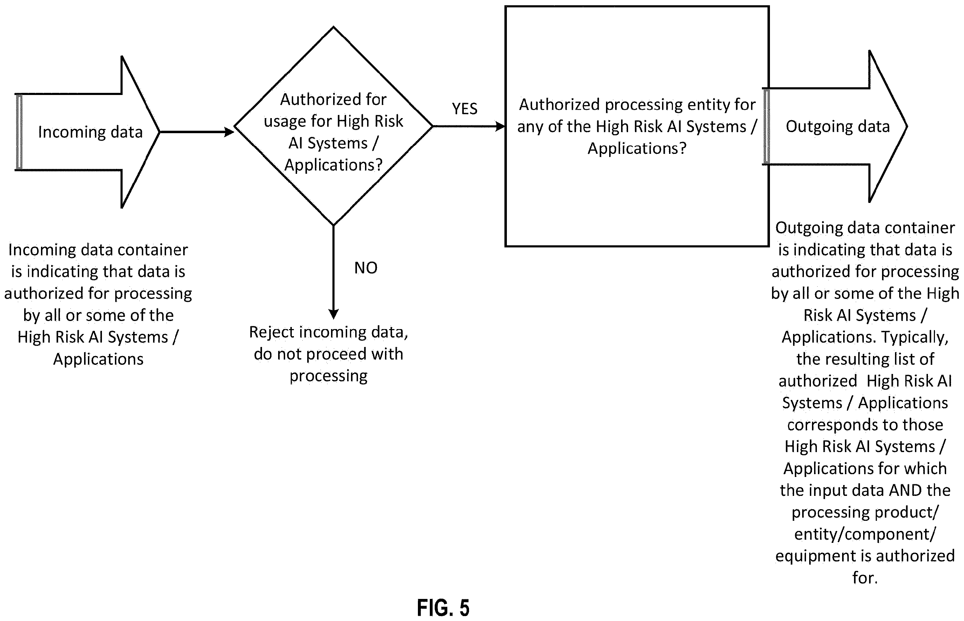

An example of such verification is depicted in Figure 5. Specifically, Figure 5 depicts an example of verification for which High Risk AI systems / applications a specific processing element may be authorized for.

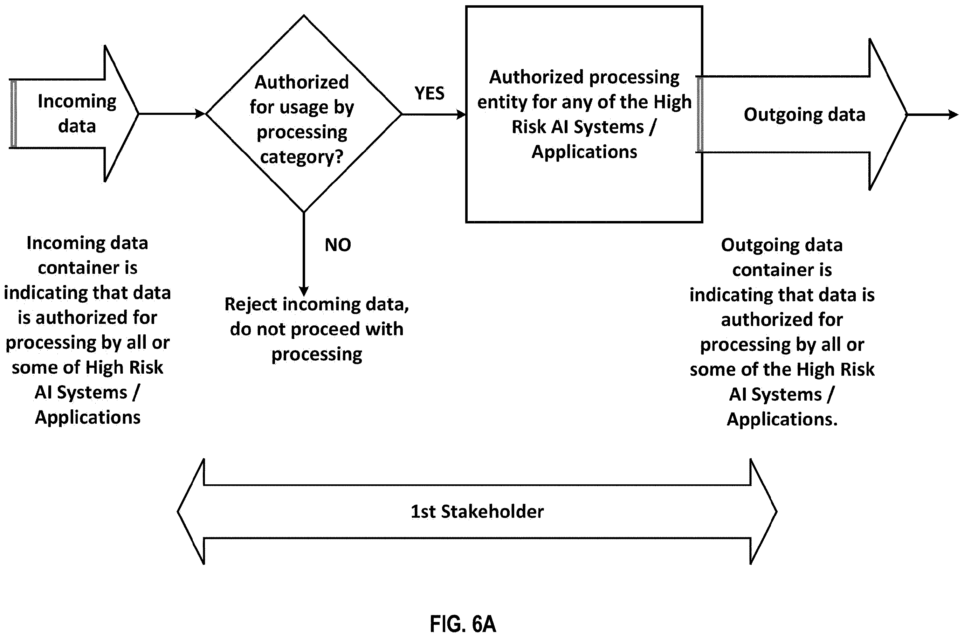

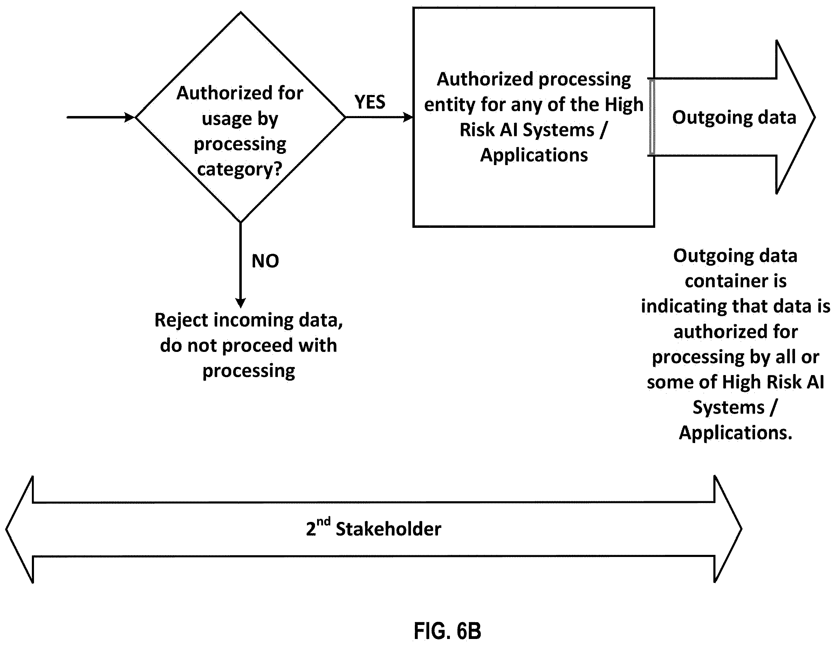

In case that there is a chain of processing entities under control of distinct stakeholders (see discussion above), then input data must be verified again in all cases and intermediate output data must be complemented with the corresponding proofs that all processing is done in accordance with the "essential requirements" for the target High Risk AI Systems / Applications. An example of such a chain is depicted in Figure 6. Specifically, Figure 6 depicts an example of cross-stakeholder verification and authorization.

To give another example, assume that the incoming data is authorized for High Risk AI Systems / Applications of a set S1 (example: S1 = {"1, 2, 3, 4"}) and the processing of the first product/entity/component is authorized for High Risk AI Systems / Applications of a set S2 (example: S2 = {"2, 3, 4, 5, 6, 7"}) and the processing of the second product/entity/component is authorized for High Risk AI Systems / Applications of a set S3 (example: S3 = {"1, 2, 4, 8, 9, 10"}), then the output data is only authorized for processing for High Risk AI Systems / Applications of S1 ∩ S2 ∩ S3 (following the previous examples: S1 ∩ S2 ∩ S3 = {"2, 4"}) because those are the only overlapping authorized High Risk AI Systems / Applications.

The example above is described with respect to only two distinct stakeholders. However, it will be understood that the process above can be extended to any number of distinct stakeholders.

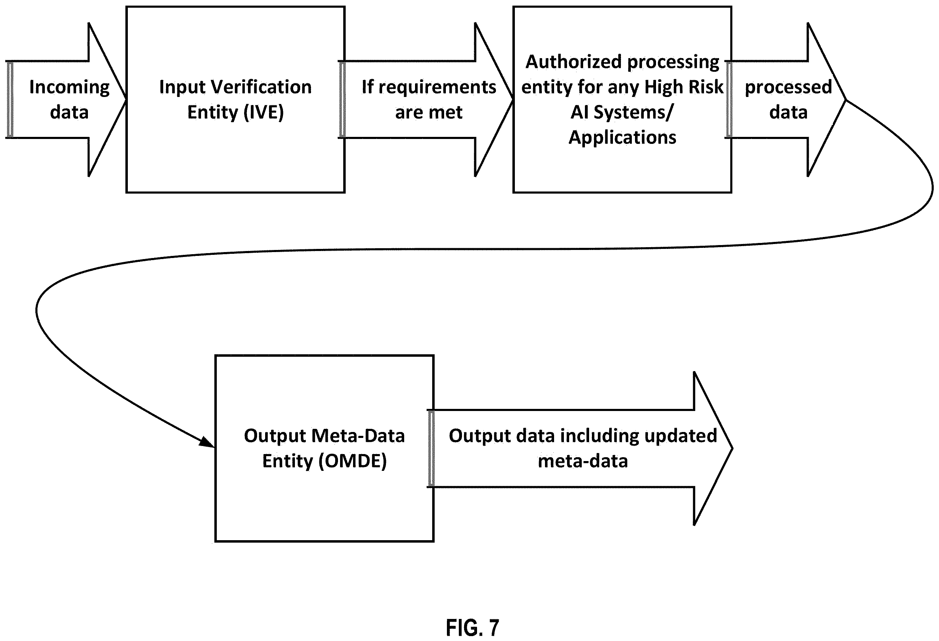

In summary, embodiments may include one or both of the following two entities (as shown, for example, in Figure 7) to a legacy AI-related processing entity/component/product/equipment:
i) An IVE configured to assess whether input data is meeting the requirements of the AI Act [1] and is thus authorized to be processed by the processing entity/component/product/equipment for the intended purpose (according to the elements detailed above). Only if the assessment results in an authorization for the processing of the data, the data is forwarded to the actual processing entity, otherwise the data is discarded and no processing is implemented.
ii) An OMDE configured to add relevant meta-data including information for which High Risk AI Systems / Applications the output data is authorized to be used for. If none of the requirements are met introduced for any of the categories described above, then the output may still be usable for general "non-High Risk" AI Systems / Applications.

### SYSTEMS AND IMPLEMENTATIONS

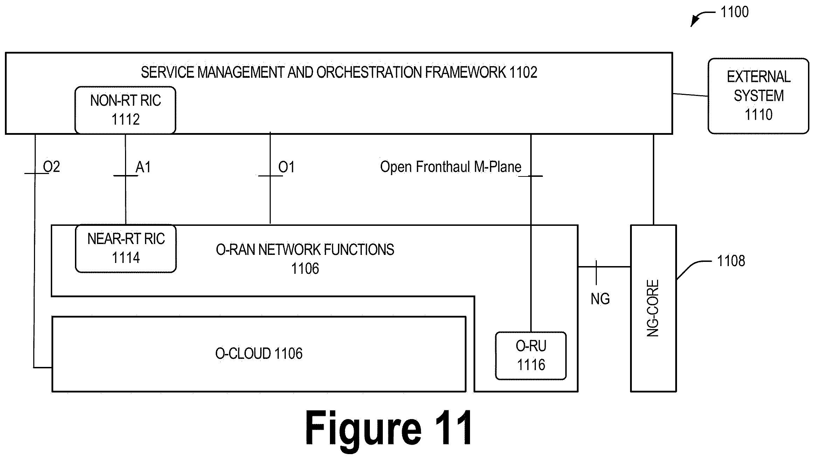

Figures 11-13 illustrate various systems, devices, and components that may implement aspects of disclosed embodiments.

Figure 11 provides a high-level view of an Open RAN (O-RAN) architecture 1100. The O-RAN architecture 1100 includes four O-RAN defined interfaces - namely, the AI interface, the O1 interface, the O2 interface, and the Open Fronthaul Management (M)-plane interface - which connect the Service Management and Orchestration (SMO) framework 1102 to O-RAN network functions (NFs) 1104 and the O-Cloud 1106. The SMO framework 1102 (described in [013]) also connects with an external system 1110, which provides enrighment data to the SMO framework 1102. Figure 11 also illustrates that the A1 interface terminates at an O-RAN Non-Real Time (RT) RAN Intelligent Controller (RIC) 1112 in or at the SMO framework 1102 and at the O-RAN Near-RT RIC 1114 in or at the O-RAN NFs 1104. The O-RAN NFs 1104 can be VNFs such as VMs or containers, sitting above the O-Cloud 1106 and/or Physical Network Functions (PNFs) utilizing customized hardware. All O-RAN NFs 1104 are expected to support the O1 interface when interfacing the SMO framework 1102.The O-RAN NFs 1104 connect to the NG-Core 1108 via the NG interface (which is a 3GPP defined interface). The Open Fronthaul M-plane interface between the SMO framework 1102 and the O-RAN Radio Unit (O-RU) 1116 supports the O-RU 1116 management in the O-RAN hybrid model as specified in [016]. The Open Fronthaul M-plane interface is an optional interface to the SMO framework 1102 that is included for backward compatibility purposes as per [016], and is intended for management of the O-RU 1116 in hybrid mode only. The management architecture of flat mode [012] and its relation to the O1 interface for the O-RU 1116 is for future study. The O-RU 1116 termination of the O1 interface towards the SMO framework 1102 as specified in [O12].

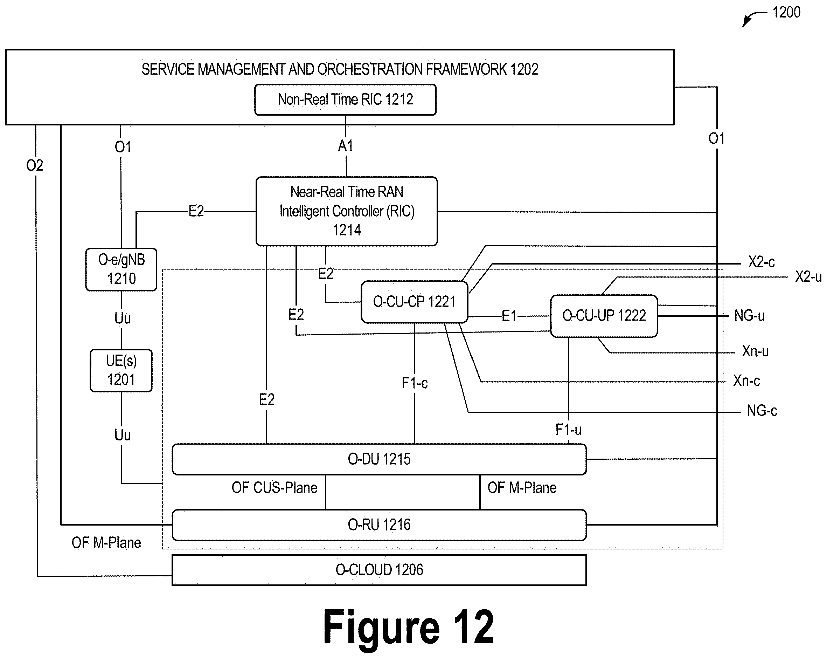

Figure 12 shows an O-RAN logical architecture 1200 corresponding to the O-RAN architecture 1100 of Figure 11. In Figure 12, the SMO framework 1202 corresponds to the SMO framework 1102, O-Cloud 1206 corresponds to the O-Cloud 1106, the non-RT RIC 1212 corresponds to the non-RT RIC 1112, the near-RT RIC 1214 corresponds to the near-RT RIC 1114, and the O-RU 1216 corresponds to the O-RU 1116 of Figure 12, respectively. The O-RAN logical architecture 1200 includes a radio portion and a management portion.

The management portion/side of the architectures 1200 includes the SMO Framework 1202 containing the non-RT RIC 1212, and may include the O-Cloud 1206. The O-Cloud 1206 is a cloud computing platform including a collection of physical infrastructure nodes to host the relevant O-RAN functions (e.g., the near-RT RIC 1214, O-CU-CP 1221, O-CU-UP 1222, and the O-DU 1215), supporting software components (e.g., OSs, VMMs, container runtime engines, ML engines, etc.), and appropriate management and orchestration functions.

The radio portion/side of the logical architecture 1200 includes the near-RT RIC 1214, the O-RAN Distributed Unit (O-DU) 1215, the O-RU 1216, the O-RAN Central Unit - Control Plane (O-CU-CP) 1221, and the O-RAN Central Unit - User Plane (O-CU-UP) 1222 functions. The radio portion/side of the logical architecture 1200 may also include the O-e/gNB 1210.

The O-DU 1215 is a logical node hosting RLC, MAC, and higher PHY layer entities/elements (High-PHY layers) based on a lower layer functional split. The O-RU 1216 is a logical node hosting lower PHY layer entities/elements (Low-PHY layer) (e.g., FFT/iFFT, PRACH extraction, etc.) and RF processing elements based on a lower layer functional split. Virtualization of O-RU 1216 is FFS. The O-CU-CP 1221 is a logical node hosting the RRC and the control plane (CP) part of the PDCP protocol. The O O-CU-UP 1222 is a a logical node hosting the user plane part of the PDCP protocol and the SDAP protocol.

An E2 interface terminates at a plurality of E2 nodes. The E2 nodes are logical nodes/entities that terminate the E2 interface. For NR/5G access, the E2 nodes include the O-CU-CP 1221, O-CU-UP 1222, O-DU 1215, or any combination of elements as defined in [O15]. For E-UTRA access the E2 nodes include the O-e/gNB 1210. As shown in Figure 12, the E2 interface also connects the O-e/gNB 1210 to the Near-RT RIC 1214. The protocols over E2 interface are based exclusively on Control Plane (CP) protocols. The E2 functions are grouped into the following categories: (a) near-RT RIC 1214 services (REPORT, INSERT, CONTROL and POLICY, as described in [O15]); and (b) near-RT RIC 1214 support functions, which include E2 Interface Management (E2 Setup, E2 Reset, Reporting of General Error Situations, etc.) and Near-RT RIC Service Update (e.g., capability exchange related to the list of E2 Node functions exposed over E2).

Figure 12 shows the Uu interface between a UE 1201 and O-e/gNB 1210 as well as between the UE 1201 and O-RAN components. The Uu interface is a 3GPP defined interface (see e.g., sections 5.2 and 5.3 of [O07]), which includes a complete protocol stack from L1 to L3 and terminates in the NG-RAN or E-UTRAN. The O-e/gNB 1210 is an LTE eNB [O04], a 5G gNB or ng-eNB [O06] that supports the E2 interface. The O-e/gNB 1210 may be the same or similar as RAN 1310, or some other base station, RAN, or nodeB discussed previously. The a UE 1201 may correspond to UE 1305, or some other UE discussed with respect to other Figures herein, and/or the like. There may be multiple UEs 1201 and/or multiple O-e/gNB 1210, each of which may be connected to one another the via respective Uu interfaces. Although not shown in Figure 12, the O-e/gNB 1210 supports O-DU 1215 and O-RU 1216 functions with an Open Fronthaul interface between them.

The Open Fronthaul (OF) interface(s) is/are between O-DU 1215 and O-RU 1216 functions [O16] [O17]. The OF interface(s) includes the Control User Synchronization (CUS) Plane and Management (M) Plane. Figures 11 and 12 also show that the O-RU 1216 terminates the OF M-Plane interface towards the O-DU 1215 and optionally towards the SMO framework 1202 as specified in [O16]. The O-RU 1216 terminates the OF CUS-Plane interface towards the O-DU 1215 and the SMO framework 1202.

The F1-c interface connects the O-CU-CP 1221 with the O-DU 1215. As defined by 3GPP, the F1-c interface is between the gNB-CU-CP and gNB-DU nodes [O07] [O10]. However, for purposes of O-RAN, the F1-c interface is adopted between the O-CU-CP 1221 with the O-DU 1215 functions while reusing the principles and protocol stack defined by 3GPP and the definition of interoperability profile specifications.

The F1-u interface connects the O-CU-UP 1222 with the O-DU 1215. As defined by 3GPP, the F1-u interface is between the gNB-CU-UP and gNB-DU nodes [O07] [O10]. However, for purposes of O-RAN, the F1-u interface is adopted between the O-CU-UP 1222 with the O-DU 1215 functions while reusing the principles and protocol stack defined by 3GPP and the definition of interoperability profile specifications.

The NG-c interface is defined by 3GPP as an interface between the gNB-CU-CP and the AMF in the 5GC [O06]. The NG-c is also referred as the N2 interface (see [O06]). The NG-u interface is defined by 3GPP, as an interface between the gNB-CU-UP and the UPF in the 5GC [O06]. The NG-u interface is referred as the N3 interface (see [O06]). In O-RAN, NG-c and NG-u protocol stacks defined by 3GPP are reused and may be adapted for O-RAN purposes.

The X2-c interface is defined in 3GPP for transmitting control plane information between eNBs or between eNB and en-gNB in EN-DC. The X2-u interface is defined in 3GPP for transmitting user plane information between eNBs or between eNB and en-gNB in EN-DC (see e.g., [O05], [O06]). In O-RAN, X2-c and X2-u protocol stacks defined by 3GPP are reused and may be adapted for O-RAN purposes

The Xn-c interface is defined in 3GPP for transmitting control plane information between gNBs, ng-eNBs, or between an ng-eNB and gNB. The Xn-u interface is defined in 3GPP for transmitting user plane information between gNBs, ng-eNBs, or between ng-eNB and gNB (see e.g., [O06], [O08]). In O-RAN, Xn-c and Xn-u protocol stacks defined by 3GPP are reused and may be adapted for O-RAN purposes

The E1 interface is defined by 3GPP as being an interface between the gNB-CU-CP (e.g., gNB-CU-CP 3728) and gNB-CU-UP (see e.g., [O07], [O09]). In O-RAN, E1 protocol stacks defined by 3GPP are reused and adapted as being an interface between the O-CU-CP 1221 and the O-CU-UP 1222 functions.

The O-RAN Non-Real Time (RT) RAN Intelligent Controller (RIC) 1212 is a logical function within the SMO framework 1102, 1202 that enables non-real-time control and optimization of RAN elements and resources; AI/machine learning (ML) workflow(s) including model training, inferences, and updates; and policy-based guidance of applications/features in the Near-RT RIC 1214.

The O-RAN near-RT RIC 1214 is a logical function that enables near-real-time control and optimization of RAN elements and resources via fine-grained data collection and actions over the E2 interface. The near-RT RIC 1214 may include one or more AI/ML workflows including model training, inferences, and updates.

The non-RT RIC 1212 can be an ML training host to host the training of one or more ML models. ML training can be performed offline using data collected from the RIC, O-DU 1215 and O-RU 1216. For supervised learning, non-RT RIC 1212 is part of the SMO framework 1202, and the ML training host and/or ML model host/actor can be part of the non-RT RIC 1212 and/or the near-RT RIC 1214. For unsupervised learning, the ML training host and ML model host/actor can be part of the non-RT RIC 1212 and/or the near-RT RIC 1214. For reinforcement learning, the ML training host and ML model host/actor may be co-located as part of the non-RT RIC 1212 and/or the near-RT RIC 1214. In some implementations, the non-RT RIC 1212 may request or trigger ML model training in the training hosts regardless of where the model is deployed and executed. ML models may be trained and not currently deployed.

In some implementations, the non-RT RIC 1212 provides a query-able catalog for an ML designer/developer to publish/install trained ML models (e.g., executable software components). In these implementations, the non-RT RIC 1212 may provide discovery mechanism if a particular ML model can be executed in a target ML inference host (MF), and what number and type of ML models can be executed in the MF. For example, there may be three types of ML catalogs made disoverable by the non-RT RIC 1212: a design-time catalog (e.g., residing outside the non-RT RIC 1212 and hosted by some other ML platform(s)), a training/deployment-time catalog (e.g., residing inside the non-RT RIC 1212), and a run-time catalog (e.g., residing inside the non-RT RIC 1212). The non-RT RIC 1212 supports necessary capabilities for ML model inference in support of ML assisted solutions running in the non-RT RIC 1212 or some other ML inference host. These capabilities enable executable software to be installed such as VMs, containers, etc. The non-RT RIC 1212 may also include and/or operate one or more ML engines, which are packaged software executable libraries that provide methods, routines, data types, etc., used to run ML models. The non-RT RIC 1212 may also implement policies to switch and activate ML model instances under different operating conditions.

The non-RT RIC 122 is be able to access feedback data (e.g., FM and PM statistics) over the O1 interface on ML model performance and perform necessary evaluations. If the ML model fails during runtime, an alarm can be generated as feedback to the non-RT RIC 1212. How well the ML model is performing in terms of prediction accuracy or other operating statistics it produces can also be sent to the non-RT RIC 1212 over O1. The non-RT RIC 1212 can also scale ML model instances running in a target MF over the O1 interface by observing resource utilization in MF. The environment where the ML model instance is running (e.g., the MF) monitors resource utilization of the running ML model. This can be done, for example, using an ORAN-SC component called ResourceMonitor in the near-RT RIC 1214 and/or in the non-RT RIC 1212, which continuously monitors resource utilization. If resources are low or fall below a certain threshold, the runtime environment in the near-RT RIC 1214 and/or the non-RT RIC 1212 provides a scaling mechanism to add more ML instances. The scaling mechanism may include a scaling factor such as an number, percentage, and/or other like data used to scale up/down the number of ML instances. ML model instances running in the target ML inference hosts may be automatically scaled by observing resource utilization in the MF. For example, the Kubernetes^{®} (K8s) runtime environment typically provides an auto-scaling feature.

The A1 interface is between the non-RT RIC 1212 (within or outside the SMO framework 1202) and the near-RT RIC 1214. The A1 interface supports three types of services as defined in [O14], including a Policy Management Service, an Enrichment Information Service, and ML Model Management Service. A1 policies have the following characteristics compared to persistent configuration [O14]: A1 policies are not critical to traffic; A1 policies have temporary validity; A1 policies may handle individual UE or dynamically defined groups of UEs; A1 policies act within and take precedence over the configuration; and A1 policies are non-persistent, i.e., do not survive a restart of the near-RT RIC.

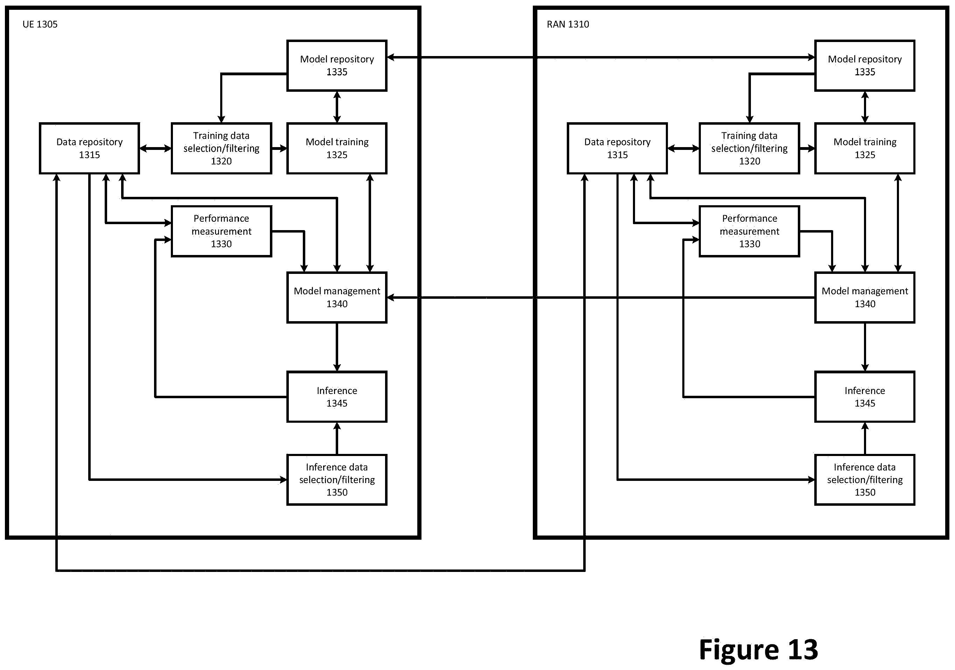

Figure 13 illustrates a simplified block diagram of artificial (Al)-assisted communication between a UE 1305 and a RAN 1310, in accordance with various embodiments. More specifically, as described in further detail below, AI/machine learning (ML) models may be used or leveraged to facilitate over-the-air communication between UE 1305 and RAN 1310.

One or both of the UE 1305 and the RAN 1310 may operate in a matter consistent with 3GPP technical specifications or technical reports for 6G systems. The UE 1305 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc.

As may be seen in Figure 13, the Al-related elements of UE 1305 may be similar to the Al-related elements of RAN 1310. For the sake of discussion herein, description of the various elements will be provided from the point of view of the UE 1305, however it will be understood that such discussion or description will apply to equally named/numbered elements of RAN 1310, unless explicitly stated otherwise.

As previously noted, the UE 1305 may include various elements or functions that are related to AI/ML. Such elements may be implemented as hardware, software, firmware, and/or some combination thereof. In embodiments, one or more of the elements may be implemented as part of the same hardware (e.g., chip or multi-processor chip), software (e.g., a computing program), or firmware as another element.

One such element may be a data repository 1315. The data repository 1315 may be responsible for data collection and storage. Specifically, the data repository 1315 may collect and store RAN configuration parameters, measurement data, performance key performance indicators (KPIs), model performance metrics, etc., for model training, update, and inference. More generally, collected data is stored into the repository. Stored data can be discovered and extracted by other elements from the data repository 1315. For example, as may be seen, the inference data selection/filter functional block 1350 may retrieve data from the data repository 1315. In various embodiments, the UE 1305 may be configured to discover and request data from the data repository 1315 in the RAN 1310, and vice versa. More generally, the data repository 1315 of the UE 1305 may be communicatively coupled with the data repository 1315 of the RAN 1310 such that the respective data repositories of the UE and the RAN may share collected data with one another.

Another such element may be a training data selection/filtering functional block 1320. The training data selection/filter functional block 1320 may be configured to generate training, validation, and testing datasets for model training. Training data may be extracted from the data repository 1315. Data may be selected/filtered based on the specific AI/ML model to be trained. Data may optionally be transformed/augmented/pre-processed (e.g., normalized) before being loaded into datasets. The training data selection/filter functional block 1320 may label data in datasets for supervised learning. The produced datasets may then be fed into model training the model training functional block 1325.

As noted above, another such element may be the model training functional block 1325. This functional block may be responsible for training and updating(re-training) AI/ML models. The selected model may be trained using the fed-in datasets (including training, validation, testing) from the training data selection/filtering functional block. The model training functional block 1325 may produce trained and tested AI/ML models which are ready for deployment. The produced trained and tested models can be stored in a model repository 1335.

The model repository 1335 may be responsible for AI/ML models' (both trained and un-trained) storage and exposure. Trained/updated model(s) may be stored into the model repository 1335. Model and model parameters may be discovered and requested by other functional blocks (e.g., the training data selection/filter functional block 1320 and/or the model training functional block 1325). In some embodiments, the UE 1305 may discover and request AI/ML models from the model repository 1335 of the RAN 1310. Similarly, the RAN 1310 may be able to discover and/or request AI/ML models from the model repository 1335 of the UE 1305. In some embodiments, the RAN 1310 may configure models and/or model parameters in the model repository 1335 of the UE 1305.

Another such element may be a model management functional block 1340. The model management functional block 1340 may be responsible for management of the AI/ML model produced by the model training functional block 1325. Such management functions may include deployment of a trained model, monitoring model performance, etc. In model deployment, the model management functional block 1340 may allocate and schedule hardware and/or software resources for inference, based on received trained and tested models. As used herein, "inference" refers to the process of using trained AI/ML model(s) to generate data analytics, actions, policies, etc. based on input inference data. In performance monitoring, based on wireless performance KPIs and model performance metrics, the model management functional block 1340 may decide to terminate the running model, start model re-training, select another model, etc. In embodiments, the model management functional block 1340 of the RAN 1310 may be able to configure model management policies in the UE 1305 as shown.

Another such element may be an inference data selection/filtering functional block 1350. The inference data selection/filter functional block 1350 may be responsible for generating datasets for model inference at the inference functional block 1345, as described below. Specifically, inference data may be extracted from the data repository 1315. The inference data selection/filter functional block 1350 may select and/or filter the data based on the deployed AI/ML model. Data may be transformed/augmented/preprocessed following the same transformation/augmentation/pre-processing as those in training data selection/filtering as described with respect to functional block 1320. The produced inference dataset may be fed into the inference functional block 1345.

Another such element may be the inference functional block 1345. The inference functional block 1345 may be responsible for executing inference as described above. Specifically, the inference functional block 1345 may consume the inference dataset provided by the inference data selection/filtering functional block 1350, and generate one or more outcomes. Such outcomes may be or include data analytics, actions, policies, etc. The outcome(s) may be provided to the performance measurement functional block 1330.

The performance measurement functional block 1330 may be configured to measure model performance metrics (e.g., accuracy, model bias, run-time latency, etc.) of deployed and executing models based on the inference outcome(s) for monitoring purpose. Model performance data may be stored in the data repository 1315.

### REFERENCES

[1] Proposal for a REGULATION OF THE EUROPEAN PARLIAMENT AND OF THE COUNCIL LAYING DOWN HARMONISED RULES ON ARTIFICIAL INTELLIGENCE (ARTIFICIAL INTELLIGENCE ACT) AND AMENDING CERTAIN UNION LEGISLATIVE ACTS, April 2021, available at https://eur-lex.europa.eu/legal-content/EN/TXT/PDF/?uri=CELEX:52021PC0206&from=EN (last accessed December 5, 2023).
[2] COMMISSION IMPLEMENTING DECISION of 22.5.2023 on a standardisation request to the European Committee for Standardisation and the European Committee for Electrotechnical Standardisation in support of Union policy on artificial intelligence.
   [O04] 3GPP TS 36.401 v15.1.0 (2019-01-09).
   [O05] 3GPP TS 36.420 v152.0 (2020-01-09).
   [O06] 3GPP TS 38.300 v16.0.0 (2020-01-08).
   [O07] 3GPP TS 38.401 v16.0.0 (2020-01-09).
   [O08] 3GPP TS 38.420 v15.2.0 (2019-01-08).
   [O09] 3GPP TS 38.460 v16.0.0 (2020-01-09).
   [O10] 3GPP TS 38.470 v16.0.0 (2020-01-09).
   [O12] O-RAN Alliance Working Group 1, O-RAN Operations and Maintenance Architecture Specification, version 2.0 (Dec 2019) ("O-RAN-WG1.OAM-Architecture-v02.00").
   [O13] O-RAN Alliance Working Group 1, O-RAN Operations and Maintenance Interface Specification, version 2.0 (Dec 2019) ("O-RAN-WG1.O1-Interface-v02.00").
   [O14] O-RAN Alliance Working Group 2, O-RAN A1 interface: General Aspects and Principles Specification, version 1.0 (Oct 2019) ("ORAN-WG2.A1.GA&P-v01.00").
   [O15] O-RAN Alliance Working Group 3, Near-Real-time RAN Intelligent Controller Architecture & E2 General Aspects and Principles ("ORAN-WG3.E2GAP.0-v0.1").
   [O16] O-RAN Alliance Working Group 4, O-RAN Fronthaul Management Plane Specification, version 2.0 (July 2019) ("ORAN-WG4.MP.0-v02.00.00").
   [O17] O-RAN Alliance Working Group 4, O-RAN Fronthaul Control, User and Synchronization Plane Specification, version 2.0 (July 2019) ("ORAN-WG4.CUS.0-v02.00").

### EXAMPLE PROCEDURES

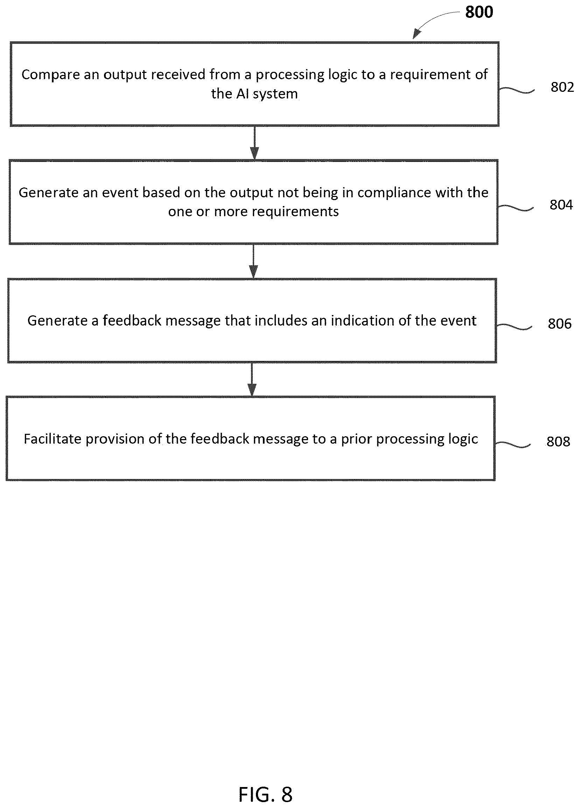

In some embodiments, the electronic device(s), network(s), system(s), chip(s) or component(s), or portions or implementations thereof, of Figures 11-13, or some other figure herein, may be configured to perform one or more processes, techniques, or methods as described herein, or portions thereof. One such process is depicted in Figure 8. The process 800 of Figure 8 may be performed, for example, by a PVE logic such as that illustrated in Figure 2. Generally, a processing logic (identified in Figure 2) may be configured to identify an input related to an AI system, wherein the input is received from a prior processing logic; and implement, based on the input, a processing action related to the AI system and generate an output. The PVE logic may be configured to compare, at 802, the output received from the processing logic to a requirement of the AI system; generate, at 804, an event based on the output not being in compliance with the one or more requirements; generate, at 806, a feedback message that includes an indication of the event; and facilitate, at 808, provision of the feedback message to a prior processing logic.

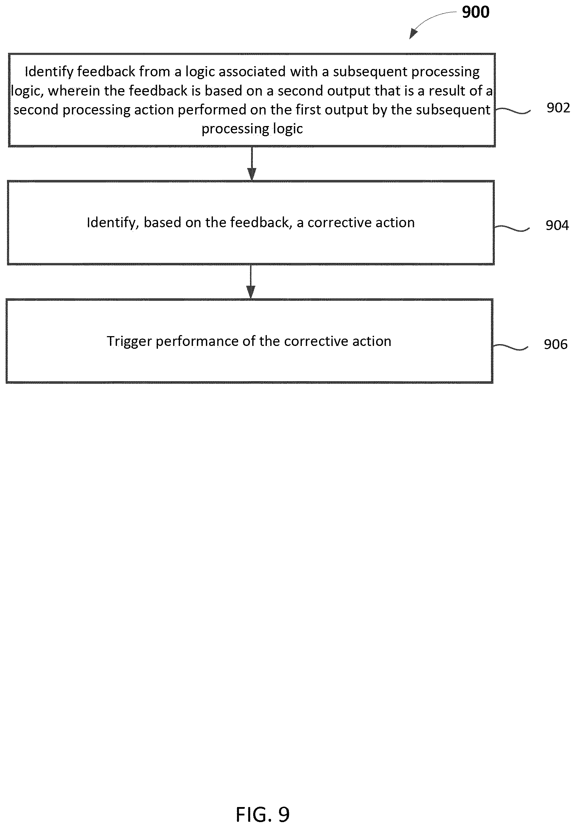

Another such process is depicted in Figure 9. The process 900 of Figure 9 may be performed, for example, by a FBAE logic such as that illustrated in Figure 2. Generally, a processing logic (identified in Figure 2) may be configured to identify an input related to an AI system; implement, based on the input, a first processing action related to the AI system and generate a first output; and facilitate provision of the output to a subsequent processing logic. The FBAE logic may be configured to identify, at 902, feedback from a logic associated with the subsequent processing logic, wherein the feedback is based on a second output that is a result of a second processing action performed on the first output by the subsequent processing logic; identify, at 904 based on the feedback, a corrective action; and trigger, at 906, performance of the corrective action.

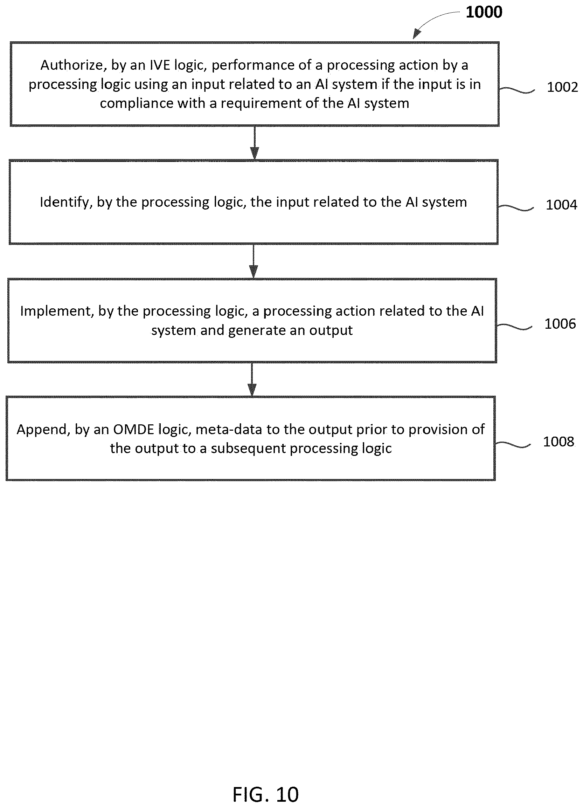

Another such process is depicted in Figure 10. The process 1000 of Figure 10 may be performed by a system such as that shown in Figure 7. Specifically, the process 1000 may include authorizing, at 1002 by an IVE logic, performance of a processing action by a processing logic using an input related to an AI system if the input is in compliance with a requirement of the AI system; identifying, at 1004 by the processing logic, the input related to the AI system; implementing, at 1006 by the processing logic, a processing action related to the AI system and generate an output; and appending, at 1008 by an OMDE logic, meta-data to the output prior to the provision of the output to a subsequent processing logic.

For one or more embodiments, at least one of the components set forth in one or more of the preceding figures may be configured to perform one or more operations, techniques, processes, and/or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

### EXAMPLES

Example 1 may include a feed-back loop in support of Multi-Stakeholder AI processing.

Example 2 may include a container structure for feed-back of the feed-back loop.

Example 3 may include, in support of Multi-Stakeholder verification, introduction of two entities at the input and output of an Al-related processing entity: i) An Input Verification Entity (IVE) which assesses whether input data is meeting the requirements of the AI Act and is thus authorized to be processed by the processing entity/component/product/equipment for the intended purpose (according to the steps detailed above). Only if the assessment results in an authorization for the processing of the data, the data is forwarded to the actual processing entity, otherwise the data is discarded and no processing is implemented. ii) An Output Meta-Data Entity (OMDE) which adds relevant meta-data including information for which High Risk AI Systems/Applications the output data is authorized to be used for. If none of the requirements are met for any of the High Risk AI Systems/Applications, then the output may still be usable for general "non-High Risk" AI Systems/Applications.

Example 4 may include a system comprising: processing logic configured to: identify an input related to an artificial intelligence (Al) system, wherein the input is received from a prior processing logic; and implement, based on the input, a processing action related to the AI system and generate an output; and processing verification entity (PVE) logic configured to: compare the output to a requirement of the AI system; generate an event based on the output not being in compliance with the requirement; generate a feedback message based that includes an indication of the event; and facilitate provision of the feedback message to the prior processing logic.

Example 5 may include the system of example 4, and/or some other example herein wherein the feedback message includes an indication of criticality of event.

Example 6 may include the system of any of examples 4-5, and/or some other example herein, wherein the feedback message includes information related to a description of the event.

Example 7 may include the system of any of examples 4-6, and/or some other example herein, wherein the feedback message includes an indication of a corrective action related to the event.

Example 8 may include the system of any of examples 4-7, and/or some other example herein, wherein the processing action includes creation of training data, training of an AI model of the AI system, inferencing based on the AI model, or usage of an inferencing result.

Example 9 may include the system of any of examples 4-8, and/or some other example herein, wherein the requirement based on the AI system is related to identification of the AI system as a High Risk AI system as defined by Article 6(2) of the European Union AI Act.

Example 10 may include the system of any of examples 4-9, and/or some other example herein, wherein the processing logic and the prior processing logic are implemented by different stakeholders than each other.

Example 11 may include a system comprising: processing logic configured to: identify an input related to an artificial intelligence (Al) system; implement, based on the input, a first processing action related to the AI system and generate a first output; and facilitate provision of the output to a subsequent processing logic; and feedback analysis entity (FBAE) logic configured to: identify feedback from a logic associated with the subsequent processing logic, wherein the feedback is based on a second output that is a result of a second processing action performed on the first output by the subsequent processing logic; identify, based on the feedback, a corrective action; and trigger performance of the corrective action.

Example 12 may include the system of example 11, and/or some other example herein, wherein the feedback is received from a processing verification entity (PVE) logic associated with the subsequent processing logic.

Example 13 may include the system of any of examples 11-12, and/or some other example herein, wherein the corrective action includes re-performance of the first processing action by the processing logic.

Example 14 includes the system of example 13, and/or some other example herein, wherein the corrective action includes use of a different input during re-performance of the first processing action by the processing logic.

Example 15 includes the system of any of examples 13-14, and/or some other example herein, wherein the corrective action includes a change to a configuration of the processing logic prior to re-performance of the first processing action by the processing logic.

Example 16 includes the system of any of examples 11-15, and/or some other example herein, wherein the processing action includes creation of training data, training of an AI model of the AI system, inferencing based on the AI model, or usage of the inferencing result.

Example 17 includes the system of any of examples 11-16, and/or some other example herein, wherein the processing logic and the prior processing logic are implemented by different stakeholders than each other.

Example 18 includes a system comprising: processing logic configured to: identify an input related to an artificial intelligence (Al) system; and implement, based on the input, a processing action related to the AI system and generate an output; an input verification entity (IVE) logic configured to authorize performance of the processing action by the processing logic using the input if the input is in compliance with a requirement of the AI system; and an output meta-data entity (OMDE) logic configured to append meta-data to the output prior to provision of the output to a subsequent processing logic.

Example 19 includes the system of example 18, and/or some other example herein, wherein the processing logic and the subsequent processing logic are implemented by different stakeholders than each other.

Example 20 includes the system of any of examples 18-19, and/or some other example herein, wherein the IVE logic is further configured to block performance of the processing action by the processing logic using the input if the input is not in compliance with the requirement of the AI system.

Example 21 includes the system of any of examples 18-20, and/or some other example herein, wherein the processing action includes creation of training data, training of an AI model of the AI system, inferencing based on the AI model, or usage of the inferencing result.

Example 22 includes the system of any of examples 18-21, and/or some other example herein, wherein the requirement based on the AI system is related to identification of the AI system as a High Risk AI system as defined by Article 6(2) of the European Union AI Act.

Example 23 includes the system of example 22, and/or some other example herein, wherein the meta-data includes an indication of which High Risk AI Systems or High Risk AI Applications are authorized to use the output.

Example Z01 may include an apparatus comprising means to perform one or more elements of a method described in or related to any of examples 1-23, or any other method or process described herein.

Example Z02 may include one or more non-transitory computer-readable media comprising instructions to cause an electronic device, upon execution of the instructions by one or more processors of the electronic device, to perform one or more elements of a method described in or related to any of examples 1-23, or any other method or process described herein.

Example Z03 may include an apparatus comprising logic, modules, or circuitry to perform one or more elements of a method described in or related to any of examples 1-23, or any other method or process described herein.

Example Z04 may include a method, technique, or process as described in or related to any of examples 1-23, or portions or parts thereof.

Example Z05 may include an apparatus comprising: one or more processors and one or more computer-readable media comprising instructions that, when executed by the one or more processors, cause the one or more processors to perform the method, techniques, or process as described in or related to any of examples 1-23, or portions thereof.

Example Z06 may include a signal as described in or related to any of examples 1-23, or portions or parts thereof.

Example Z07 may include a datagram, packet, frame, segment, protocol data unit (PDU), or message as described in or related to any of examples 1-23, or portions or parts thereof, or otherwise described in the present disclosure.

Example Z08 may include a signal encoded with data as described in or related to any of examples 1-23, or portions or parts thereof, or otherwise described in the present disclosure.

Example Z09 may include a signal encoded with a datagram, packet, frame, segment, protocol data unit (PDU), or message as described in or related to any of examples 1-23, or portions or parts thereof, or otherwise described in the present disclosure.

Example Z 10 may include an electromagnetic signal carrying computer-readable instructions, wherein execution of the computer-readable instructions by one or more processors is to cause the one or more processors to perform the method, techniques, or process as described in or related to any of examples 1-23, or portions thereof.

Example Z11 may include a computer program comprising instructions, wherein execution of the program by a processing element is to cause the processing element to carry out the method, techniques, or process as described in or related to any of examples 1-23, or portions thereof.

Example 212 may include a signal in a wireless network as shown and described herein.

Example 213 may include a method of communicating in a wireless network as shown and described herein.

Example 214 may include a system for providing wireless communication as shown and described herein.

Example 215 may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

### Abbreviations

Unless used differently herein, terms, definitions, and abbreviations may be consistent with terms, definitions, and abbreviations defined in 3GPP TR 21.905 v16.0.0 (2019-06). For the purposes of the present document, the following abbreviations may apply to the examples and embodiments discussed herein.

| | | | | | |
|---|---|---|---|---|---|
| 3GPP | Third Generation | CM | Connection Management, | ECCA | extended clear channel |
| | Partnership Project | | Conditional Mandatory | | assessment, extended CCA |
| 4G | Fourth Generation | CMAS | Commercial Mobile Alert | ECCE | Enhanced Control Channel |
| 5G | Fifth Generation | | Service | | Element, Enhanced CCE |
| 5GC | 5G Core network | CMD | Command | ED | Energy Detection |
| AC | Application Client | CMS | Cloud Management System | EDGE | Enhanced Datarates for GSM |
| ACR | Application Context Relocation | CO | Conditional Optional | | Evolution (GSM Evolution) |
| ACK | Acknowledgement | CoMP | Coordinated Multi-Point | EAS | Edge Application Server |
| ACID | Application Client Identification | CORESET | Control Resource Set | EASID | Edge Application Server |
| ADRF | Analytical Data Repository | COTS | Commercial Off-The-Shelf | | Identification |
| | Function | CP | Control Plane, Cyclic Prefix, | ECS | Edge Configuration Server |
| AF | Application Function | | Connection Point | ECSP | Edge Computing Service |
| AM | Acknowledged Mode | CPD | Connection Point | | Provider |
| AMBR | Aggregate Maximum Bit | | Descriptor | EDN | Edge Data Network |
| | Rate | CPE | Customer Premise | EEC | Edge Enabler Client |
| AMF | Access and Mobility | | Equipment | EECID | Edge Enabler Client |
| | Management Function | CPICH | Common Pilot Channel | | Identification |
| AN | Access Network | CQI | Channel Quality Indicator | EES | Edge Enabler Server |
| AnLF | Analytics Logical Function | CPU | CSI processing unit, Central | EESID | Edge Enabler Server |
| ANR | Automatic Neighbour Relation | | Processing Unit | | Identification |
| AOA | Angle of Arrival | C/R | Command/Response field | EHE | Edge Hosting Environment |
| AP | Application Protocol, Antenna | | bit | EGMF | Exposure Governance |
| Port, Access | Point | CRAN | Cloud Radio Access | | Management Function |
| API | Application Programming | | Network, Cloud RAN | EGPRS | Enhanced GPRS |
| | Interface | CRB | Common Resource Block | EIR | Equipment Identity Register |
| APN | Access Point Name | CRC | Cyclic Redundancy Check | eLAA | enhanced Licensed Assisted |
| ARP | Allocation and Retention | CRI | Channel-State Information | | Access, enhanced LAA |
| | Priority | | Resource Indicator, CSI-RS | EM | Element Manager |
| ARQ | Automatic Repeat Request | | Resource Indicator | eMBB | Enhanced Mobile |
| AS | Access Stratum | C-RNTI | Cell RNTI | | Broadband |
| ASP | Application Service Provider | CS | Circuit Switched | EMS | Element Management System |
| | | CSCF | call session control function | eNB | evolved NodeB, E-UTRAN |
| ASN.1 | Abstract Syntax Notation | CSAR | Cloud Service Archive | | Node B |
| | One | CSI | Channel-State Information | EN-DC | E-UTRA-NR Dual |
| AUSF | Authentication Server | CSI-IM | CSI Interference | | Connectivity |
| | Function | | Measurement | EPC | Evolved Packet Core |
| AWGN | Additive White Gaussian | CSI-RS | CSI Reference Signal | EPDCCH | enhanced PDCCH, enhanced |
| | Noise | CSI-RSRP | CSI reference signal received | | Physical Downlink Control |
| BAP | Backhaul Adaptation Protocol | power | | | Cannel |
| BCH | Broadcast Channel | CSI-RSRQ | CSI reference signal received | EPRE | Energy per resource element |
| BER | Bit Error Ratio | quality | | EPS | Evolved Packet System |
| BFD | Beam Failure Detection | CSI-SINR | CSI signal-to-noise and | EREG | enhanced REG, enhanced |
| BLER | Block Error Rate | | interference ratio | | resource element groups |
| BPSK | Binary Phase Shift Keying | CSMA | Carrier Sense Multiple Access | ETSI | European Telecommunications |
| BRAS | Broadband Remote Access | CSMA/CA | CSMA with collision | | Standards Institute |
| | Server | | avoidance | ETWS | Earthquake and Tsunami |
| BSS | Business Support System | CSS | Common Search Space, Cell-specific Search Space | | Warning System |
| BS | Base Station | | | eUICC | embedded UICC, embedded |
| BSR | Buffer Status Report | CTF | Charging Trigger Function | | Universal Integrated Circuit |
| BW | Bandwidth | CTS | Clear-to-Send | | Card |
| BWP | Bandwidth Part | CW | Codeword | E-UTRA | Evolved UTRA |
| C-RNTI | Cell Radio Network | CWS | Contention Window Size | E-UTRAN | Evolved UTRAN |
| | Temporary Identity | D2D | Device-to-Device | EV2X | Enhanced V2X |
| CA | Carrier Aggregation, | DC | Dual Connectivity, Direct | FlAP | Fl Application Protocol |
| | Certification Authority | | Current | FI-C | Fl Control plane interface |
| CAPEX | CAPital Expenditure | DCI | Downlink Control | Fl-U | Fl User plane interface |
| CBD | Candidate Beam Detection | | Information | FACCH | Fast Associated Control |
| CBRA | Contention Based Random | DF | Deployment Flavour | | CHannel |
| | Access | DL | Downlink | FACCH/F | Fast Associated Control |
| CC | Component Carrier, Country | DMTF | Distributed Management Task | | Channel/Full rate |
| Code, | Cryptographic Checksum | Force | | FACCH/H | Fast Associated Control |
| CCA | Clear Channel Assessment | DPDK | Data Plane Development Kit | | Channel/Half rate |
| CCE | Control Channel Element | DM-RS, | DMRS Demodulation | FACH | Forward Access Channel |
| CCCH | Common Control Channel | Reference | Signal | FAUSCH | Fast Uplink Signalling Channel |
| CE | Coverage Enhancement | DN | Data network | FB | Functional Block |
| CDM | Content Delivery Network | DNN | Data Network Name | FBI | Feedback Information |
| CDMA | Code-Division Multiple Access | DNAI | Data Network Access Identifier | FCC | Federal Communications |
| CDR | Charging Data Request | | | | Commission |
| CDR | Charging Data Response | DRB | Data Radio Bearer | FCCH | Frequency Correction |
| CFRA | Contention Free Random | DRS | Discovery Reference Signal | | CHannel |
| | Access | DRX | Discontinuous Reception | FDD | Frequency Division Duplex |
| CG | Cell Group | DSL | Domain Specific Language. | FDM | Frequency Division |
| CGF | Charging Gateway Function | | Digital Subscriber Line | | Multiplex |
| CHF | Charging Function | DSLAM | DSL Access Multiplexer | FDMA | Frequency Division |
| CI | Cell Identity | DwPTS | Downlink Pilot Time Slot | | Multiple Access |
| CID | Cell-ID (e.g., positioning | E-LAN | Ethernet Local Area | FE | Front End |
| | method) | | Network | FEC | Forward Error Correction |
| CIM | Common Information Model | E2E | End-to-End | FFS | For Further Study |
| CIR | Carrier to Interference Ratio | EAS | Edge Application Server | FFT | Fast Fourier Transformation |
| CK | Cipher Key | | | | |
| feLAA | further enhanced Licensed | IETF | Internet Engineering Task | MAC | Message authentication code |
| | Assisted Access, further | | Force | | (security/encryption context) |
| | enhanced LAA | IF | Infrastructure | MAC-A | MAC used for |
| FN | Frame Number | IIOT | Industrial Internet of Things | | authentication and key |
| FPGA | Field-Programmable Gate | IM | Interference Measurement, | | agreement (TSG T WG3 context) |
| | Array | | Intermodulation, IP | MAC-I | MAC used for data integrity |
| FR | Frequency Range | | Multimedia | | of signalling messages (TSG |
| FQDN Fully | Qualified Domain Name | IMC | IMS Credentials | | T WG3 context) |
| G-RNTI | GERAN Radio Network | IMEI | International Mobile | MANO | Management and |
| | Temporary Identity | | Equipment Identity | | Orchestration |
| GERAN | GSM EDGE RAN, GSM EDGE | IMGI | International mobile group | MBMS | Multimedia Broadcast and |
| | Radio Access Network | | identity | | Multicast Service |
| GGSN | Gateway GPRS Support Node | IMPI | IP Multimedia Private Identity | MBSFN | Multimedia Broadcast |
| GLONASS | GLObal'naya | IMPU | IP Multimedia Public identity | | multicast service Single |
| | NAvigatsionnaya | IMS | IP Multimedia Subsystem | | Frequency Network |
| | Sputnikovaya Sistema (Engl.: | IMSI | International Mobile | MCC | Mobile Country Code |
| Global | Navigation Satellite System) | | Subscriber Identity | MCG | Master Cell Group |
| gNB | Next Generation NodeB | IoT | Internet of Things | MCOT | Maximum Channel |
| gNB-CU | gNB-centralized unit, Next | IP | Internet Protocol | | Occupancy Time |
| | Generation NodeB | Ipsec | IP Security, Internet Protocol | MCS | Modulation and coding scheme |
| | centralized unit | Security | | MDAF | Management Data Analytics |
| gNB-DU | gNB-distributed unit, Next | IP-CAN | IP-Connectivity Access | | Function |
| | Generation NodeB | | Network | MDAS | Management Data Analytics |
| | distributed unit | IP-M | IP Multicast | | Service |
| GNSS | Global Navigation Satellite | IPv4 | Internet Protocol Version 4 | MDT | Minimization of Drive Tests |
| | System | IPv6 | Internet Protocol Version 6 | ME | Mobile Equipment |
| GPRS | General Packet Radio Service | IR | Infrared | MeNB | master eNB |
| GPSI | Generic Public Subscription | is | In Sync | MER | Message Error Ratio |
| | Identifier | IRP | Integration Reference Point | MGL | Measurement Gap Length |
| GSM | Global System for Mobile | ISDN | Integrated Services Digital | MGRP | Measurement Gap |
| | Communications, Groupe | | Network | | Repetition Period |
| | Spécial Mobile | ISIM | IM Services Identity Module | MIB | Master Information Block, |
| GTP | GPRS Tunneling Protocol | ISO | International Organisation | | Management Information |
| GTP-U | GPRS Tunnelling Protocol | | for Standardisation | | Base |
| | for User Plane | ISP | Internet Service Provider | MIMO | Multiple Input Multiple Output |
| GTS | Go To Sleep Signal (related | IWF | Interworking-Function | MLC | Mobile Location Centre |
| | to WUS) | I-WLAN | Interworking WLAN | MM | Mobility Management |
| GUMMEI | Globally Unique MME | | Constraint length of the | MME | Mobility Management Entity |
| | Identifier | | convolutional code, USIM | MN | Master Node |
| GUTI | Globally Unique Temporary | | Individual key | MNO | Mobile Network Operator |
| | UE Identity | kB | Kilobyte (1000 bytes) | MO | Measurement Object, Mobile |
| HARQ | Hybrid ARQ, Hybrid | kbps | kilo-bits per second | Originated | |
| | Automatic Repeat Request | Kc | Ciphering key | MPBCH | MTC Physical Broadcast |
| HANDO | Handover | Ki | Individual subscriber | | CHannel |
| HFN | HyperFrame Number | | authentication key | MPDCCH | MTC Physical Downlink |
| HHO | Hard Handover | KPI | Key Performance Indicator | | Control CHannel |
| HLR | Home Location Register | KQI | Key Quality Indicator | MPDSCH | MTC Physical Downlink |
| HN | Home Network | KSI | Key Set Identifier | | Shared CHannel |
| HO | Handover | ksps | kilo-symbols per second | MPRACH | MTC Physical Random Access |
| HPLMN | Home Public Land Mobile | KVM | Kernel Virtual Machine | CHannel | |
| | Network | L1 | Layer 1 (physical layer) | MPUSCH | MTC Physical Uplink Shared |
| HSDPA | High Speed Downlink Packet | Ll-RSRP | Layer 1 reference signal received | | Channel |
| Access | | power | | MPLS | MultiProtocol Label |
| HSN | Hopping Sequence Number | L2 | Layer 2 (data link layer) | | Switching |
| HSPA | High Speed Packet Access | L3 | Layer 3 (network layer) | MS | Mobile Station |
| HSS | Home Subscriber Server | LAA | Licensed Assisted Access | MSB | Most Significant Bit |
| HSUPA | High Speed Uplink Packet | LAN | Local Area Network | MSC | Mobile Switching Centre |
| | Access | LADN | Local Area Data Network | MSI | Minimum System |
| HTTP | Hyper Text Transfer Protocol | LBT | Listen Before Talk | | Information, MCH |
| HTTPS | Hyper Text Transfer Protocol | LCM | LifeCycle Management | | Scheduling Information |
| Secure (https | is http/1.1 over SSL, | LCR | Low Chip Rate | MSID | Mobile Station Identifier |
| i.e. port | 443) | LCS | Location Services | MSIN | Mobile Station |
| I-Block | Information Block | LCID | Logical Channel ID | | Identification Number |
| ICCID | Integrated Circuit Card | LI | Layer Indicator | MSISDN | Mobile Subscriber ISDN Number |
| | Identification | LLC | Logical Link Control, Low | MT | Mobile Terminated, Mobile |
| IAB | Integrated Access and | | Layer Compatibility | | Termination |
| | Backhaul | LMF | Location Management Function | MTC | Machine-Type |
| ICIC | Inter-Cell Interference | LOS | Line of Sight | | Communications |
| | Coordination | LPLMN | Local PLMN | MTLF | Model Training Logical Function |
| ID | Identity, identifier | LPP | LTE Positioning Protocol | mMTC | massive MTC, massive |
| IDFT | Inverse Discrete Fourier | LSB | Least Significant Bit | | Machine-Type |
| | Transform | LTE | Long Term Evolution | | Communications |
| IE | Information element | LWA | LTE-WLAN aggregation | MU-MIMO | Multi User MIMO |
| IBE | In-Band Emission | LWIP | LTE/WLAN Radio Level | MWUS | MTC wake-up signal, MTC |
| IEEE | Institute of Electrical and | | Integration with IPsec Tunnel | | WUS |
| | Electronics Engineers | LTE | Long Term Evolution | NACK | Negative Acknowledgement |
| IEI | Information Element | M2M | Machine-to-Machine | NAI | Network Access Identifier |
| | Identifier | MAC | Medium Access Control | NAS | Non-Access Stratum, Non-Access Stratum layer |
| IEIDL | Information Element Identifier Data Length | | (protocol layering context) | | |
| NCT | Network Connectivity | PCI | Physical Cell ID, Physical | RAN | Radio Access Network |
| | Topology | | Cell Identity | RAND | RANDom number (used for |
| NC-JT | Non-Coherent Joint | PCEF | Policy and Charging | | authentication) |
| | Transmission | | Enforcement Function | RAR | Random Access Response |
| NEC | Network Capability | PCF | Policy Control Function | RAT | Radio Access Technology |
| | Exposure | PCRF | Policy Control and Charging | RAU | Routing Area Update |
| NE-DC | NR-E-UTRA Dual | | Rules Function | RB | Resource block, Radio Bearer |
| | Connectivity | PDCP | Packet Data Convergence | RBG | Resource block group |
| NEF | Network Exposure | | Protocol, Packet Data | REG | Resource Element Group |
| | Function | | Convergence Protocol layer | Rel | Release |
| NF | Network Function | PDCCH | Physical Downlink Control | REQ | REQuest |
| NFP | Network Forwarding Path | | Channel | RF | Radio Frequency |
| NFPD | Network Forwarding Path | PDCP | Packet Data Convergence | RI | Rank Indicator |
| | Descriptor | | Protocol | RIV | Resource indicator value |
| NFV | Network Functions | PDN | Packet Data Network, Public | RL | Radio Link |
| | Virtualization | Data Network | | RLC | Radio Link Control, Radio |
| NFVI | NFV Infrastructure | PDSCH | Physical Downlink Shared | | Link Control layer |
| NFVO | NFV Orchestrator | | Channel | RLC AM | RLC Acknowledged Mode |
| NG | Next Generation, Next Gen | PDU | Protocol Data Unit | RLC UM | RLC Unacknowledged Mode |
| NGEN-DC | NG-RAN E-UTRA-NR Dual | PEI | Permanent Equipment | RLF | Radio Link Failure |
| | Connectivity | | Identifiers | RLM | Radio Link Monitoring |
| NM | Network Manager | PFD | Packet Flow Description | RLM-RS | Reference Signal for RLM |
| NMS | Network Management System | P-GW | PDN Gateway | RM | Registration Management |
| N-PoP | Network Point of Presence | PHICH | Physical hybrid-ARQ | RMC | Reference Measurement Channel |
| NMIB, N-MIB | Narrowband MIB | | indicator channel | RMSI | Remaining MSI, Remaining |
| NPBCH | Narrowband Physical | PHY | Physical layer | | Minimum System |
| | Broadcast CHannel | PLMN | Public Land Mobile | | Information |
| NPDCCH | Narrowband Physical | | Network | RN | Relay Node |
| | Downlink Control CHannel | PIN | Personal Identification Number | RNC | Radio Network Controller |
| NPDSCH | Narrowband Physical | PM | Performance Measurement | RNL | Radio Network Layer |
| | Downlink Shared CHannel | PMI | Precoding Matrix Indicator | RNTI | Radio Network Temporary |
| NPRACH | Narrowband Physical Random | PNF | Physical Network Function | | Identifier |
| Access | CHannel | PNFD | Physical Network Function | ROHC | RObust Header |
| NPUSCH | Narrowband Physical Uplink | | Descriptor | | Compression |
| Shared | CHannel | PNFR | Physical Network Function | RRC | Radio Resource Control, Radio |
| NPSS | Narrowband Primary | | Record | Resource | Control layer |
| | Synchronization Signal | POC | PTT over Cellular | RRM | Radio Resource |
| NSSS | Narrowband Secondary | PP, PTP | Point-to-Point | | Management |
| | Synchronization Signal | PPP | Point-to-Point Protocol | RS | Reference Signal |
| NR | New Radio, Neighbour Relation | PRACH | Physical RACK | RSRP | Reference Signal Received |
| NRF | NF Repository Function | PRB | Physical resource block | | Power |
| NRS | Narrowband Reference Signal | PRG | Physical resource block group | RSRQ | Reference Signal Received |
| NS | Network Service | ProSe | Proximity Services, | | Quality |
| NSA | Non-Standalone operation | | Proximity-Based Service | RSSI | Received Signal Strength |
| | mode | PRS | Positioning Reference Signal | | Indicator |
| NSD | Network Service Descriptor | PRR | Packet Reception Radio | RSU | Road Side Unit |
| NSR | Network Service Record | PS | Packet Services | RSTD | Reference Signal Time |
| NSSAI | Network Slice Selection | PSBCH | Physical Sidelink Broadcast | | difference |
| | Assistance Information | | Channel | RTP | Real Time Protocol |
| S-NNSAI | Single-NSSAI | PSDCH | Physical Sidelink Downlink | RTS | Ready-To-Send |
| NSSF | Network Slice Selection | | Channel | RTT | Round Trip Time |
| | Function | PSCCH | Physical Sidelink Control | Rx | Reception, Receiving, |
| NW | Network | | Channel | | Receiver |
| NWDAF | Network Data Analytics Function | PSSCH | Physical Sidelink Shared Channel | SlAP | S1 Application Protocol |
| NWUS | Narrowband wake-up signal, | PSFCH | physical sidelink feedback | Sl-MME | S1 for the control plane |
| Narrowband | WUS | | channel | Sl-U | S1 for the user plane |
| NZP | Non-Zero Power | PSCell | Primary SCell | S-CSCF | serving CSCF |
| O&M | Operation and Maintenance | PSS | Primary Synchronization Signal | S-GW | Serving Gateway |
| ODU2 | Optical channel Data Unit - | PSTN | Public Switched Telephone | S-RNTI | SRNC Radio Network |
| | type 2 | | Network | | Temporary Identity |
| OFDM | Orthogonal Frequency | PT-RS | Phase-tracking reference signal | S-TMSI | SAE Temporary Mobile Station |
| | Division Multiplexing | PTT | Push-to-Talk | Identifier | |
| OFDMA | Orthogonal Frequency | PUCCH | Physical Uplink Control Channel | SA | Standalone operation mode |
| | Division Multiple Access | PUSCH | Physical Uplink Shared Channel | SAE | System Architecture |
| OOB | Out-of-band | QAM | Quadrature Amplitude | | Evolution |
| OOS | Out of Sync | | Modulation | SAP | Service Access Point |
| OPEX | OPerating Expense | QCI | QoS class of identifier | SAPD | Service Access Point |
| OSI | Other System Information | QCL | Quasi co-location | | Descriptor |
| OSS | Operations Support System | QFI | QoS Flow ID, QoS Flow | SAPI | Service Access Point |
| OTA | over-the-air | | Identifier | | Identifier |
| PAPR | Peak-to-Average Power Ratio | QoS | Quality of Service | SCC | Secondary Component Carrier, |
| PAR | Peak to Average Ratio | QPSK | Quadrature (Quaternary) Phase | Secondary | CC |
| PBCH | Physical Broadcast Channel | Shift Keying | | SCell | Secondary Cell |
| PC | Power Control, Personal | QZSS | Quasi-Zenith Satellite System | SCEF | Service Capability Exposure |
| | Computer | RA-RNTI | Random Access RNTI | | Function |
| PCC | Primary Component Carrier, | RAB | Radio Access Bearer, Random | SC-FDMA | Single Carrier Frequency |
| Primary CC | | Access Burst | | | Division Multiple Access |
| P-CSCF | Proxy CSCF | RACH | Random Access Channel | SCG | Secondary Cell Group |
| PCell | Primary Cell | RADIUS | Remote Authentication Dial | SCM | Security Context |
| | | | In User Service | | Management |
| SCS | Subcarrier Spacing | SS-RSRP | Synchronization Signal based | UICC | Universal Integrated Circuit |
| SCTP | Stream Control | | Reference Signal Received | | Card |
| | Transmission Protocol | | Power | UL | Uplink |
| SDAP | Service Data Adaptation | SS-RSRQ | Synchronization Signal based | UM | Unacknowledged Mode |
| | Protocol, Service Data | | Reference Signal Received | UML | Unified Modelling Language |
| | Adaptation Protocol layer | | Quality | UMTS | Universal Mobile |
| SDL | Supplementary Downlink | SS-SINR | Synchronization Signal based | | Telecommunications System |
| SDNF | Structured Data Storage | | Signal to Noise and Interference | UP | User Plane |
| | Network Function | | Ratio | UPF | User Plane Function |
| SDP | Session Description Protocol | SSS | Secondary Synchronization | URI | Uniform Resource Identifier |
| SDSF | Structured Data Storage | | Signal | URL | Uniform Resource Locator |
| | Function | SSSG | Search Space Set Group | URLLC | Ultra-Reliable and Low Latency |
| SDT | Small Data Transmission | SSSIF | Search Space Set Indicator | USB | Universal Serial Bus |
| SDU | Service Data Unit | SST | Slice/Service Types | USIM | Universal Subscriber Identity |
| SEAF | Security Anchor Function | SU-MIMO | Single User MIMO | Module | |
| SeNB | secondary eNB | SUL | Supplementary Uplink | USS | UE-specific search space |
| SEPP | Security Edge Protection Proxy | TA | Timing Advance, Tracking | UTRA | UMTS Terrestrial Radio Access |
| SFI | Slot format indication | | Area | UTRAN | Universal Terrestrial Radio |
| SFTD | Space-Frequency Time | TAC | Tracking Area Code | | Access Network |
| | Diversity, SFN and frame | TAG | Timing Advance Group | UwPTS | Uplink Pilot Time Slot |
| | timing difference | TAI | Tracking Area Identity | V2I | Vehicle-to-Infrastruction |
| SFN | System Frame Number | TAU | Tracking Area Update | V2P | Vehicle-to-Pedestrian |
| SgNB | Secondary gNB | TB | Transport Block | V2V | Vehicle-to-Vehicle |
| SGSN | Serving GPRS Support Node | TBS | Transport Block Size | V2X | Vehicle-to-everything |
| S-GW | Serving Gateway | TBD | To Be Defined | VIM | Virtualized Infrastructure |
| SI | System Information | TCI | Transmission Configuration | | Manager |
| SI-RNTI | System Information RNTI | | Indicator | VL | Virtual Link, |
| SIB | System Information Block | TCP | Transmission | VLAN | Virtual LAN, Virtual Local |
| SIM | Subscriber Identity Module | | Communication Protocol | | Area Network |
| SIP | Session Initiated Protocol | TDD | Time Division Duplex | VM | Virtual Machine |
| SiP | System in Package | TDM | Time Division Multiplexing | VNF | Virtualized Network |
| SL | Sidelink | TDMA | Time Division Multiple Access | | Function |
| SLA | Service Level Agreement | TE | Terminal Equipment | VNFFG | VNF Forwarding Graph |
| SM | Session Management | TEID | Tunnel End Point Identifier | VNFFGD | VNF Forwarding Graph |
| SMF | Session Management | TFT | Traffic Flow Template | | Descriptor |
| | Function | TMSI | Temporary Mobile | VNFM | VNF Manager |
| SMS | Short Message Service | | Subscriber Identity | VoIP | Voice-over-IP, Voice-over-Internet Protocol |
| SMSF | SMS Function | TNL | Transport Network Layer | | |
| SMTC | SSB-based Measurement | TPC | Transmit Power Control | VPLMN | Visited Public Land Mobile |
| | Timing Configuration | TPMI | Transmitted Precoding Matrix | | Network |
| SN | Secondary Node, Sequence | | Indicator | VPN | Virtual Private Network |
| | Number | TR | Technical Report | VRB | Virtual Resource Block |
| SoC | System on Chip | TRP, TRxP | Transmission Reception Point | WiMAX | Worldwide Interoperability |
| SON | Self- Organizing Network | TRS | Tracking Reference Signal | | for Microwave Access |
| SpCell | Special Cell | TRx | Transceiver | WLAN | Wireless Local Area |
| | SP-CSI-RNTISemi-Persistent CSI RNTI | TS | Technical Specifications, | | Network |
| SPS | Semi-Persistent Scheduling | | Technical Standard | WMAN | Wireless Metropolitan Area |
| SQN | Sequence number | TTI | Transmission Time Interval | | Network |
| SR | Scheduling Request | Tx | Transmission, | WPAN | Wireless Personal Area |
| SRB | Signalling Radio Bearer | | Transmitting, Transmitter | | Network |
| SRS | Sounding Reference Signal | U-RNTI | UTRAN Radio Network | X2-C | X2-Control plane |
| SS | Synchronization Signal | | Temporary Identity | X2-U | X2-User plane |
| SSB | Synchronization Signal Block | UART | Universal Asynchronous | XML | extensible Markup |
| SSID | Service Set Identifier | | Receiver and Transmitter | | Language |
| SS/PBCH | Block | UCI | Uplink Control Information | XRES | Expected user RESponse |
| SSBRI | SS/PBCH Block Resource | UE | User Equipment | XOR | exclusive OR |
| | Indicator, Synchronization | UDM | Unified Data Management | ZC | Zadoff Chu |
| | Signal Block Resource | UDP | User Datagram Protocol | ZP | Zero Power |
| | Indicator | UDSF | Unstructured Data Storage | | |
| SSC | Session and Service Continuity | | Network Function | | |

### Terminology

For the purposes of the present document, the following terms and definitions are applicable to the examples and embodiments discussed herein.

The term "application" may refer to a complete and deployable package, environment to achieve a certain function in an operational environment. The term "AI/ML application" or the like may be an application that contains some AI/ML models and application-level descriptions.

The term "circuitry" as used herein refers to, is part of, or includes hardware components such as an electronic circuit, a logic circuit, a processor (shared, dedicated, or group) and/or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable SoC), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, and/or transferring digital data. Processing circuitry may include one or more processing cores to execute instructions and one or more memory structures to store program and data information. The term "processor circuitry" may refer to one or more application processors, one or more baseband processors, a physical central processing unit (CPU), a single-core processor, a dual-core processor, a triple-core processor, a quad-core processor, and/or any other device capable of executing or otherwise operating computer-executable instructions, such as program code, software modules, and/or functional processes. Processing circuitry may include more hardware accelerators, which may be microprocessors, programmable processing devices, or the like. The one or more hardware accelerators may include, for example, computer vision (CV) and/or deep learning (DL) accelerators. The terms "application circuitry" and/or "baseband circuitry" may be considered synonymous to, and may be referred to as, "processor circuitry."

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, and/or the like.

The term "user equipment" or "UE" as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "network element" as used herein refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, RAN device, RAN node, gateway, server, virtualized VNF, NFVI, and/or the like.

The term "computer system" as used herein refers to any type interconnected electronic devices, computer devices, or components thereof. Additionally, the term "computer system" and/or "system" may refer to various components of a computer that are communicatively coupled with one another. Furthermore, the term "computer system" and/or "system" may refer to multiple computer devices and/or multiple computing systems that are communicatively coupled with one another and configured to share computing and/or networking resources.

The term "appliance," "computer appliance," or the like, as used herein refers to a computer device or computer system with program code (e.g., software or firmware) that is specifically designed to provide a specific computing resource. A "virtual appliance" is a virtual machine image to be implemented by a hypervisor-equipped device that virtualizes or emulates a computer appliance or otherwise is dedicated to provide a specific computing resource.

The term "resource" as used herein refers to a physical or virtual device, a physical or virtual component within a computing environment, and/or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, and/or the like. A "hardware resource" may refer to compute, storage, and/or network resources provided by physical hardware element(s). A "virtualized resource" may refer to compute, storage, and/or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" as used herein refers to a connection between two devices through a RAT for the purpose of transmitting and receiving information.

The terms "instantiate," "instantiation," and the like as used herein refers to the creation of an instance. An "instance" also refers to a concrete occurrence of an object, which may occur, for example, during execution of program code.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or link, and/or the like.

The term "information element" refers to a structural element containing one or more fields. The term "field" refers to individual contents of an information element, or a data element that contains content.

The term "SMTC" refers to an SSB-based measurement timing configuration configured by *SSB-MeasurementTimingConfiguration.*

The term "SSB" refers to an SS/PBCH block.

The term "a "Primary Cell" refers to the MCG cell, operating on the primary frequency, in which the UE either performs the initial connection establishment procedure or initiates the connection re-establishment procedure.

The term "Primary SCG Cell" refers to the SCG cell in which the UE performs random access when performing the Reconfiguration with Sync procedure for DC operation.

The term "Secondary Cell" refers to a cell providing additional radio resources on top of a Special Cell for a UE configured with CA.

The term "Secondary Cell Group" refers to the subset of serving cells comprising the PSCell and zero or more secondary cells for a UE configured with DC.

The term "Serving Cell" refers to the primary cell for a UE in RRC _CONNECTED not configured with CA/DC there is only one serving cell comprising of the primary cell.

The term "serving cell" or "serving cells" refers to the set of cells comprising the Special Cell(s) and all secondary cells for a UE in RRC _CONNECTED configured with CA/.

The term "Special Cell" refers to the PCell of the MCG or the PSCell of the SCG for DC operation; otherwise, the term "Special Cell" refers to the Pcell.

The term "machine learning" or "ML" refers to the use of computer systems implementing algorithms and/or statistical models to perform specific task(s) without using explicit instructions, but instead relying on patterns and inferences. ML algorithms build or estimate mathematical model(s) (referred to as "ML models" or the like) based on sample data (referred to as "training data," "model training information," or the like) in order to make predictions or decisions without being explicitly programmed to perform such tasks. Generally, an ML algorithm is a computer program that learns from experience with respect to some task and some performance measure, and an ML model may be any object or data structure created after an ML algorithm is trained with one or more training datasets. After training, an ML model may be used to make predictions on new datasets. Although the term "ML algorithm" refers to different concepts than the term "ML model," these terms as discussed herein may be used interchangeably for the purposes of the present disclosure.

The term "machine learning model," "ML model," or the like may also refer to ML methods and concepts used by an ML-assisted solution. An "ML-assisted solution" is a solution that addresses a specific use case using ML algorithms during operation. ML models include supervised learning (e.g., linear regression, k-nearest neighbor (KNN), descision tree algorithms, support machine vectors, Bayesian algorithm, ensemble algorithms, etc.) unsupervised learning (e.g., K-means clustering, principle component analysis (PCA), etc.), reinforcement learning (e.g., Q-learning, multi-armed bandit learning, deep RL, etc.), neural networks, and the like. Depending on the implementation a specific ML model could have many sub-models as components and the ML model may train all sub-models together. Separately trained ML models can also be chained together in an ML pipeline during inference. An "ML pipeline" is a set of functionalities, functions, or functional entities specific for an ML-assisted solution; an ML pipeline may include one or several data sources in a data pipeline, a model training pipeline, a model evaluation pipeline, and an actor. The "actor" is an entity that hosts an ML assisted solution using the output of the ML model inference). The term "ML training host" refers to an entity, such as a network function, that hosts the training of the model. The term "ML inference host" refers to an entity, such as a network function, that hosts model during inference mode (which includes both the model execution as well as any online learning if applicable). The ML-host informs the actor about the output of the ML algorithm, and the actor takes a decision for an action (an "action" is performed by an actor as a result of the output of an ML assisted solution). The term "model inference information" refers to information used as an input to the ML model for determining inference(s); the data used to train an ML model and the data used to determine inferences may overlap, however, "training data" and "inference data" refer to different concepts.

## Claims

1. A system comprising:
processing logic configured to:
identify an input related to an artificial intelligence (Al) system, wherein the input is received from a prior processing logic; and
implement, based on the input, a processing action related to the Al system and generate an output; and
processing verification entity (PVE) logic configured to:
compare the output to a requirement of the Al system;
generate an event based on the output not being in compliance with the requirement;
generate a feedback message based that includes an indication of the event; and
facilitate provision of the feedback message to the prior processing logic.

2. The system of claim 1, wherein the feedback message includes an indication of criticality of event; or
optionally, wherein the feedback message includes information related to a description of the event; or
optionally, wherein the feedback message includes an indication of a corrective action related to the event.

3. The system of claim 1, wherein the processing action includes creation of training data, training of an Al model of the Al system, inferencing based on the Al model, or usage of an inferencing result.

4. The system of any of claims 1-3, wherein the requirement based on the Al system is related to identification of the Al system as a High Risk AI system as defined by Article 6(2) of the European Union Al Act.

5. The system of any of claims 1-3, wherein the processing logic and the prior processing logic are implemented by different stakeholders than each other.

6. A system comprising:
processing logic configured to:
identify an input related to an artificial intelligence (Al) system;
implement, based on the input, a first processing action related to the Al system and generate a first output; and
facilitate provision of the output to a subsequent processing logic; and feedback analysis entity (FBAE) logic configured to:
identify feedback from a logic associated with the subsequent processing logic, wherein the feedback is based on a second output that is a result of a second processing action performed on the first output by the subsequent processing logic;
identify, based on the feedback, a corrective action; and
trigger performance of the corrective action.

7. The system of claim 6, wherein the feedback is received from a processing verification entity (PVE) logic associated with the subsequent processing logic.

8. The system of claim 6, wherein the corrective action includes re-performance of the first processing action by the processing logic; and
optionally, wherein the corrective action includes use of a different input during re-performance of the first processing action by the processing logic; or
optionally, wherein the corrective action includes a change to a configuration of the processing logic prior to re-performance of the first processing action by the processing logic.

9. The system of any of claims 6-8, wherein the processing action includes creation of training data, training of an Al model of the Al system, inferencing based on the Al model, or usage of an inferencing result.

10. The system of any of claims 6-8, wherein the processing logic and the subsequent processing logic are implemented by different stakeholders than each other.

11. A system comprising:
processing logic configured to:
identify an input related to an artificial intelligence (Al) system; and
implement, based on the input, a processing action related to the Al system and generate an output;
an input verification entity (IVE) logic configured to authorize performance of the processing action by the processing logic using the input if the input is in compliance with a requirement of the Al system; and
an output meta-data entity (OMDE) logic configured to append meta-data to the output prior to provision of the output to a subsequent processing logic.

12. The system of claim 11, wherein the processing logic and the subsequent processing logic are implemented by different stakeholders than each other.

13. The system of claim 11, wherein the IVE logic is further configured to block performance of the processing action by the processing logic using the input if the input is not in compliance with the requirement of the Al system.

14. The system of any of claims 11-13, wherein the processing action includes creation of training data, training of an Al model of the Al system, inferencing based on the Al model, or usage of an inferencing result.

15. The system of any of claims 11-13, wherein the requirement based on the Al system is related to identification of the Al system as a High Risk AI system as defined by Article 6(2) of the European Union Al Act; and
optionally, wherein the meta-data includes an indication of which High Risk Al Systems or High Risk Al Applications are authorized to use the output.
